# EUROPEAN PATENT SPECIFICATION

(11) **EP 1 173 687 B1**
(45) Date of publication and mention of the grant of the patent: **15.12.2004**
(21) Application number: 00927570.2
(22) Date of filing: 27.04.2000
(51) Int. Cl.: F16D 55/40, B60T 1/06, F16D 65/097, F16D 65/12

(54) **DISC BRAKE WITH SLIDABLE BRAKE DISCS**
SCHEIBENBREMSE MIT VERSCHIEBBAREN BREMSSCHEIBEN
FREIN A DISQUES DOTE DE DISQUES COULISSANTS

(30) Priority: 30.04.1999 US 303183
(43) Date of publication of application: 23.01.2002
(73) Proprietor: Delphi Technologies, Inc., Troy, MI 48098-2815 (US)
(72) Inventor: BUNKER, Kenneth, James, Rearsby, Leicester LE7 4YN (GB)
(74) Representative: Lamb, Richard Andrew
(86) International application number: PCT/GB2000/001816
(87) International publication number: WO 2000/066907

(56) References cited:
- WO-A-98/25804
- US-A- 4 538 708
- US-A- 4 576 257
- US-A- 4 995 483

## Description

This invention relates to a disc brake system and, more particularly, to a disc brake system for use on production vehicles.

Currently, production vehicles such as automobiles often have spot-type disc brakes, having a fixed brake disc and a caliper configuration with an inboard piston and cylinder operated by hydraulic fluid. The caliper is bolted to a suspension member either forward or rearward with respect to a vertical plane through a wheel axle and includes a slidable bridge sliding on pins with an outer brake pad on the outboard end of the bridge. Operation of the brake pedal forces the piston outwardly to engage and to slide an inner brake pad along the bridge into frictional braking engagement with the inner side of the fixed disc, which is rigidly fixed to a hub on which the wheel is mounted. A reaction force on the slidable bridge causes it to slide on the pins and force the outer brake pad tightly against the outer side of the fixed brake disc. Deceleration of the clamped disc and its associated hub and its attached wheel thereby decelerates the vehicle. As the piston is forced to slide to engage the brake pads with the fixed disc, an internal O ring seal between the cylinder and the piston is compressed, and energy is stored therein which is released, when the braking fluid pressure is relieved, to slide the piston in the reverse direction to its off brake position in the cylinder.

This conventional disc brake hereinafter called a "conventional, fixed disc brake" because its brake disc is fixed to the wheel hub. In contrast thereto, there is disclosed in the patent literature, such as United States Patents 4,844,206 and 4,576,255; U.K. patent application 2 184 801; and South African published application 70/5340, a pair of slidable brake discs that slide axially along a wheel hub and utilize a fixed bridge with a fixed brake pad at a distal end of the bridge; and a hydraulic piston that slides the brake discs and slidable brake pads outwardly to bring an outer side of the outer brake disc into braking engagement with the distal, fixed brake pad. The fixed disc brake system is widely used, particularly to brake the front wheels while the slidable brake disc system is not currently in use on production vehicles. In order to be used on vehicles, any brake system must meet a long list of demanding specifications, some of which are explained herein. Until now, slidable brake disc systems appear to be unable to meet the rigorous, demanding criteria to the satisfaction of automobile manufacturers or suppliers. Vehicle manufacturers and brake suppliers undertake the risk of product liability lawsuits or product recalls and, therefore, are reluctant to adopt a new braking system unless it has superior qualities such as improved cost, weight, efficiency, longevity or other qualities relative to the standard fixed disc brake.

The current fixed brake disc systems used on vehicles are quite heavy and a reduction in weight is a desirable goal for the slidable disc brake system. In the fixed brake, the sliding bridge is quite large and heavy as are the bolts to bolt the caliper unit to the suspension member and heavy slide pins are used to support the slidable bridge. The typical brake disc itself is also quite heavy with its bell or hat shape and with its annular rim for engaging the brake pad.

Weight of the fixed brake disc system is detrimental not only to fuel efficiency but also to steering. That is, the brakes represent an unsprung mass on the wheel that must be turned and steered and that also must be supported to withstand high loads including the brake torque and loads due to a wheel going up and down as it travels over uneven road surfaces. The overall size of the fixed, disc brake and its location on the vehicle suspension requires a large space envelope that limits the locking angle and vehicle turning circle, particularly for some types of wheel suspensions.

In addition to size, cost and weight, there are the criteria of efficiency, proficiency and longevity. Brake wear is a longevity problem and a longer brake pad life and brake disc life are desired by vehicle manufacturers which are increasingly providing long term service warranties for their vehicles, as well as for the vehicle owner who ultimately pays for brake replacement in one manner or the other. The brake disc life can be adversely affected by a localized, rubbing contact between the brake pads and the brake pad, particularly at the brake-off position of the braking system. If the brake disc is tilted from a true, vertical plane normal to a horizontal axis through the hub, an increased localized rubbing contact of brake pads on the disc results and is a source of disc thickness variation (DTV), i.e., a different thickness in cross-section of the fixed brake disc at different radial locations from the disc axis. Significant DTV results in vibrations that the driver feels and requires costly brake maintenance to eliminate the vibration problem.

Some fixed disc brake systems have noise problems which are cured to a certain extent by the addition of noise suppressors, which add to the size, weight and cost of the system. Brake systems must be free of rattles and should be free of noise. The current bell or hat shape of the conventional fixed brakes can be noisy because an impact on the disc causes a noise resonance and loud sound due to its bell shape and fixed attachment to the hub. Therefore, it is desirable to eliminate such a noisy shape and fixed mounting of the brake disc to the hub.

In addition to above, there also may occur a "feel" problem where the driver experiences a long or deep pedal depression when operating the brakes. Sometimes the deep pedal is the result of "knock back" of the actuator piston in the cylinder in the piston return direction that displaces hydraulic liquid and shifts the piston deeper in the cylinder. A cornering or bumps in the road may deflect the suspension or slidable brake caliper and knock back the piston and cause the vehicle operator to experience a deep pedal braking operation. Another potential source of "knock back" in the conventional sliding bridge, fixed brake disc system is the result of an initial large deflection of the outer distal end of the slidable bridge at heavy braking loads where the bridge distal end is often deflected 0.006 inch or more. The sliding bridges are already quite heavy and massive to withstand the braking torque and to provide the stiffness for the distal end of the bridge. When the brake pressure is released, the distal bridge end rebounds and can cause knock back of the piston in the cylinder.

Among the demanding temperature tests that vehicle brakes are subjected to is the Auto Motive Sport (AMS) fade test in which the brake temperature is monitored during ten braking stops as fast as possible over a very short time interval. In brief, the AMS vehicle test involves the driver flooring the gas pedal to accelerate vehicle extremely fast to 100 Kph. and then braking as hard as the driver can to stop the vehicle as quickly as it can be braked to a stop. This is quickly iterated for a total of ten rapid accelerations and decelerations with the temperatures of the brake disc being measured over the course of the ten cycles. It is desired to keep the maximum temperature of the brake disc below its "Judder" effect temperature at which severe disc geometry and metallurgical changes occur and deteriorate the brake disc. The Judder effect temperature is usually in the range of 650° to 700°C.; and this AMS test is difficult to pass. In that AMS test of a lightweight automobile having the fixed brake system (against which the slidable disc brake system of this invention is compared), the brake disc temperature exceeded 650°C. and the temperature drop between braking operations was only about 30°C. The test data described herein is from two identical, production model automobiles of B Class front wheel drive. They have a kerb weight of about 1000 Kgs. and a gross vehicle weight of about 1350 Kgs.

Manifestly, the test data for different vehicles may vary substantially from that described herein, which data is given for the purposes of illustration of one embodiment of the invention and is to be construed as a limitation for the invention as defined by the claims attached hereto.

Brake disc temperature also can be monitored to provide an indication of "off-brake" residual torque of the braking system. Even though the vehicle operator is not operating the braking pedal and is steering the vehicle along a straight line path, the brake pads are rubbing against the fixed brake and causing the temperature thereof to rise substantially above ambient. The cornering of a vehicle and sharp turning may also shift the slidable brake caliper into rubbing contact with the fixed brake disc. In a current production vehicle of lightweight and having a fixed brake system, the disc temperature was measured at least 35°C. above ambient when the ambient temperature is between 10° to 20°C. This is a good indication that current fixed brake systems have considerable residual torque at the off-brake condition, and concomitant wear and fuel energy waste. It will be recognized that the bell or hat shape of fixed brake disc has non-uniform cross-sectional thickness at the corners and has different fillets that can result in non-uniform expansion thereby causing an increase in the space envelope of the outer rim of the brake disc and resultant rubbing, thereby producing a high off-brake, residual torque.

In order to test conventional brakes when used in mountainous terrain having descending, steep grades with much cornering of the vehicle, a conventional disc brake was tested over thirty descents of a steep mountain with each descent lasting about twenty-four minutes. These fixed brakes discs on a lightweight, production car experienced temperature of over 600°C. after about 13 minutes of descent; and they reached a maximum temperature of almost 680°C. at the end of the run. Hence, there is a need for a disc brake system that runs cooler in such a test so that it does not potentially cause a Judder effect deterioration of the brake disc in mountainous usage. These fixed disc brakes had high brake fluid temperatures and poor standing soaking curves after trans-mountain runs.

It will be appreciated that in sliding brake disc system that brake disc must slide axially on the hub between an off-brake position, where the residual torque should be low and a braking position where the torque is high, and then return to the off-brake position to reduce the residual torque. The sliding connection between the brake disc and hub must be free to move despite being subjected to corrosive conditions and over a long period of use. The slidable brake disc must not be noisy or squeal under low and high temperature conditions, and it must not wobble or generate dust or produce vibrations that the driver can feel or hear. In the patent literature, such as U.K. patent application 2 184 801 and U.S. Patent 4,576,255, the slidable brake disc systems had spline grooves oversized relative to the size of the disc teeth inserted into the grooves and spring devices where mounted on the hub to push the discs to rotate a driving side, flank of each tooth into mating engagement with a flank of the oversized spline groove. The oversized notches were used to prevent the previously heated and now cooled disc from jamming in the splines. To eliminate "knock back" and chattering, springs were inserted into the spline notches to bias the spline flanks on the disc and hub into engagement with one another. Such designs do not provide a good drive connection between the discs and the splined hub, are costly and apparently allow the discs to wobble relative to the hub at high braking loads.

From the foregoing, it will be seen that there is a need for a better, slidable disc mounting system that is more efficient and that does not generate noise or squeal as the brake discs expand at high temperatures and that does not wobble at high braking loads. Also, there is a need for a twin disc braking system that operates at low residual torque in an off-brake condition to reduce DTV and energy loss.

According to the present invention there is provided a disc bake system as described in accompanying claim 1. There is also provided a vehicle braking and suspension system incorporating such a disc brake system as described in accompanying claim 22. Further according to the invention there is provided a method of disc braking as described in claim 29.

Further features of the invention are described in the appendant dependent claims

In the embodiments of the present invention the disc brake incorporates resilient means both in relation to the mounting of the brake discs on their mounting hub and in relation to the brake friction elements or pads in relation to their fixed mounting or caliper.

The resilient means are of a structure and strength chosen to be capable of, both in the case of the brake discs and in the case of the brake friction elements, maintaining these components of the brake assembly in their required working attitudes with respect to the structures on which they are mounted. In other words, the springs or resilient means for the brake discs are constructed so as to hold the brake discs in non-tilted working attitudes as they rotate. Likewise, the resilient means for the friction elements or pads maintain these latter structures in their required attitudes with respect to their fixed mounting or caliper. In both cases, the resilient nature of the resilient means permits, under the dynamic conditions arising during use of the vehicle and due to engine vibration and vehicle motion/road surface induced vibration and similar factors, a degree of movement from the defined working position (as opposed to the linear axial sliding movement needed to effect friction element-to-disc engagement and disengagement when commencing and terminating braking) which is needed under normal conditions of vehicle use.

In this regard, it is to be noted that the resilient means or springs used in the embodiments in relation to the friction elements for maintaining same in their normal unfilled attitudes, differ significantly from the springs disclosed in WO 98/25804 (docket 2561) and WO 98/26192 (docket 2558) in which the pad springs are mere anti-rattle springs not adapted to hold the brake pads against tilting movement, but merely to avoid rattling. Moreover, in the embodiments of the present invention the springs for the discs and for the pads are balanced in terms of their relative loading applied to the discs and the pads in order to achieve the necessary separation of same when braking is discontinued and yet holding the pads and discs against tilting during use. Thus, the spring forces exerted on the pads or friction elements of the present invention are much stronger than those needed merely to prevent rattling or noise suppression. The spring forces are sufficient to restrain the slidable brake pads or friction elements from moving into contact with the brake discs in an uncontrolled manner. The use of the substantially stronger pad springs in the present embodiments assists in positioning the outer rims of the brake discs in their brake-off position for reducing residual brake torque.

We have discovered that, contrary to the teaching in the above-identified WO specifications in which it is suggested that anti-tilt- mounted discs are sufficient in themselves so far as disc/pad alignment is concerned, and all that is required for the pads is the provision of anti-rattle springs, further provision is desirable to reduce residual brake torque. We have now established that a significant reduction in residual torque can be achieved by the adoption of anti-tilt spring means for the friction elements. This feature preferably comprises the combination of resilient means in co-operation with face-to-face complementary attitude-defining surfaces on the friction elements and their guide means, and the arrangement being such that there is a co-operative effect with the anti-tilt mounted brake disc or discs such that the effect of dynamic factors arising during use including engine-and road-induced vibrations leading to micro-scale interactions of the discs and friction elements after brake application produces a relatively well-defined backing-off of the pairs of axially-moveable structures (discs and friction elements) leading to well-defined clearance positions allowing relatively low level residual torque in which the haphazard torque-producing interactions, characteristic of the relatively less well-defined friction element positions of the arrangement in the above-identified WO specifications are minimised or avoided.

In accordance with the present invention there is provided a new and improved slidable disc brake system particularly adapted for use on production vehicles. This is achieved by the use of a unique mounting and control of the positions of the slidable brake discs and brake pads that results in low frictional face pad wear, and a low, off-brake, residual torque and a good drive connection between the hub and the slidable brake disc.

The preferred construction uses force applicators such as leaf springs located between the hub and the brake discs to float the brake discs for axial sliding movement and to hold them against wobbling on the hub while allowing the brake discs to have light, random contact with the brake pads. The rotating brake discs will shift slightly in the axial direction on the hub from their brakes-on position to establish a brakes-off position. These rotating, floating discs also exert axially directed forces on the brake pads to slide them axially to their off-brake positions along the stationary bridge. The brake pads are constrained by force applicators such as leaf springs to keep their pad faces parallel to the brake discs and not to allow the brake pad faces to tilt into a corner engagement with the brake disc as would cause localized rubbing contact, thereby generating disc thickness variation in the brake discs and resultant vibration of the discs. That is, the spring holds the brake pad against tilting movements and axial sliding movements on the supporting bridge by vibration and inertia forces caused by operation of the vehicle. If allowed to tilt on the bridge, the pad faces experience a localized rubbing contact which increases the residual drag torque, pad wear and DTV at the off-brake position. The brake pads are preferably constrained by leaf springs to float on the bridge and the brake discs are constrained by leaf springs between the discs and hub to float on the hub so that the contact between the brake pads and discs is a light, random contact thereby resulting in reduced residual drag torque and disc thickness variation.

Preferably, the respective leaf spring forces applied to brake pads and the brake discs are balanced relative to one another so that the system can move from its braking condition to its off-brake position by action of separation forces between the discs and the braking pads; and yet, the brake pads are held in the off-brake position against tilting under vibration and vehicle caused inertial forces and thereby causing a localized rubbing and DTV. More specifically, in the case of a two-brake disc system, when shifting from the brakes on-condition to brakes off-condition, the outer brake disc slides axially on the hub to separate itself from the stationary, distal brake pad fixed to the bridge; and the central slidable brake pad between the first disc and the second disc slides axially along the bridge away from the first disc to separate its outer pad face from the facing side of the first disc. The second, inner brake disc slides axially along the hub toward the piston and cylinder assembly to separate itself from the inner pad face on the central brake pad. The inner slidable brake pad at the piston slides axially inward toward the piston and cylinder assembly to separate its outer friction face from a facing side of the second brake disc. The respective leaf springs on the bridge and on the hub are balanced to allow this separation and yet hold the brake pads and brake discs from tilting, as would cause DTV or from unwanted axial sliding engagement as would cause a high residual drag torque, under the vibration and vehicle inertial forces being experienced by an unsprung brake system.

The floating twin disc, slidable brake discs and floating brake pads of the present invention provide a brake system that passed the AMS fade test with temperatures significantly lower than the conventional disc brake tested which did not pass this test. These twin disc brakes had a maximum temperature of about 120°C lower than the maximum temperature for the fixed brake which was in the Judder range. Also, the cooling of the twin disc brakes was about 80°C between stops relative to a cooling of about only 30°C between stops for the standard fixed brake. Also, very significant results were found in the temperature of the fixed brake disc and the slidable brake discs as the respective brake discs cooled after braking at 100 mph with the fixed brake temperature above ambient being at 3.5 times higher than slidable brake temperature above ambient. This shows that the twin disc, slidable brake has significantly lower drag torque. An objective of the invention is to reduce the drag torque to about 1 newton.meter as compared with a tested 6.0 newton meter as compared to a conventional disc brake tested. Thus, the slidable, twin disc brake system of this invention was found to have improved operating characteristics relative to operating temperatures when compared to a standard, fixed disc brake system.

In the preferred embodiment of the invention described herein, a significant size and weight reduction are achieved relative with the twin slidable brake system of this invention relative to a conventional fixed disc brake system with its large sliding caliper. More specifically, an unsprung, weight reduction in excess of 2 Kgs. was achieved for each front wheel. This is a very significant weight reduction and has implications for fuel savings, suspension design, vacuum assists, steerability, etc. This weight saving of 2 Kgs is relative to a lighter, solid, fixed brake disc; and relative to a heavier, ventilated fixed brake disc, the average saving may be as much as 3.6 Kgs. per front wheel. This is an unsprung weight reduction which is desired by production vehicle manufacturers.

In accordance with an important aspect of the invention, the brake cylinder is integrally formed in the suspension casting or knuckle above the axle on the vertical centerline. This integral suspension casting reduces the number of parts for the suspension and provides a more compact, and lighter weight system. The floating brake disc system does not knock back the piston during cornering or other dynamic movements as easily as the large sliding caliper standard disc brake. Also, the fixed bridge need not be large and heavy as the sliding caliper bridge which, even though large and heavy, deflects significantly under heavy braking loads by 0.006 inch, for example. These large sliding caliper disc brakes are usually mounted at about 3:00 o'clock or 9:00 o'clock positions rather than a preferred 12:00 o'clock position for the twin slidable disc brake of this invention. Also, the mounting of the bridge above the axle at the vertical centerline position allows an increase in steering angles and vehicle turning circle.

The unit cost reduction for the embodiment of the invention illustrated herein relative to a current fixed brake system for the same vehicle is estimated to be substantial and may approach 35% for the same vehicle. The slidable twin disc brake of this invention is designed to pursue the goals of substantial reduction in cost, weight, space envelope; increased longevity of brake pads; and better efficiency in manufacture, assembly and performance.

When the slidable disc brake is used with two slidable brake discs and four brake pads, such as on the front wheels of a production vehicle, the braking pressure needed may be about 50% of the braking pressure used today with the conventional systems using a fixed disc and two braking pads. Higher braking pressures applied to the brake disc usually can result in higher disc temperatures. The requirement for high brake pressures has resulted in the large-scale use of braking assists, such as vacuum assists and, in large commercial diesel trucks, the use of vacuum pumps to supply the vacuum for the brake assist system. The vacuum assists add weight and cost to the vehicle. The reduced braking pressure of this invention allows elimination of a vacuum assist system, in some instances, or the use of a smaller assist to generate the reduced brake pressure used in the slidable disc brake.

### Brief Description of the Drawings

FIG. 1 is a perspective view of a slidable, twin disc brake assembly constructed in accordance with a preferred embodiment of the invention;
FIG. 2 is a diagrammatic view of an outer spring constraining the brake pads and an inner spring constraining the brake discs;
FIG. 3 is a plan view showing the spring constraining the brake pads;
FIG. 3A is a cross-sectional view showing the spring applying restraining forces to the tops of the brake pad carriers;
FIG. 4 is a diagrammatic view of three leaf spring constraining a brake disc on a hub;
FIG. 5 is an exploded view of the illustrative assembly;
FIG. 6 is a side elevational view of the illustrative assembly;
FIG. 7 is similar to FIG. 6 but shows the illustrative assembly in vertical cross section;
FIG. 8 shows temperature decay curves for disc brakes due to residual drag torque with the brakes off;
FIG. 9 shows curves for an AMS fade test of a standard fixed brake;
FIG. 10 shows the curves for an AMS fade test of a twin disc brake;
FIG. 11 is a vertical cross-sectional view taken through a suspension link of the illustrative assembly;
FIG. 12 is a view similar to FIG. 16, but of a modification of the illustrative assembly;
FIG. 13 is a perspective view of an alternative leaf spring having raised ribs thereon;
FIG. 14 is a diagrammatic, enlarged view of the points of contact between the leaf springs and the brake disc;
FIG. 15 is an enlarged, fragmentary and exploded view of the driving connection between a hub and slidable brake disc;
FIG. 15A is similar to FIG. 15 except that the driving connection is enlarged and meshed to drive the brake disc with rotation of the hub;
FIG. 16 is a view taken in the direction of the arrow XVI in FIG. 6;
FIG. 17 is a view taken in the direction of the arrow XVII in FIG. 7; and
FIG. 18 is a fragmentary view of a sealing ring engaging a piston in a hydraulic cylinder.

### Detailed Description of the Preferred Embodiment

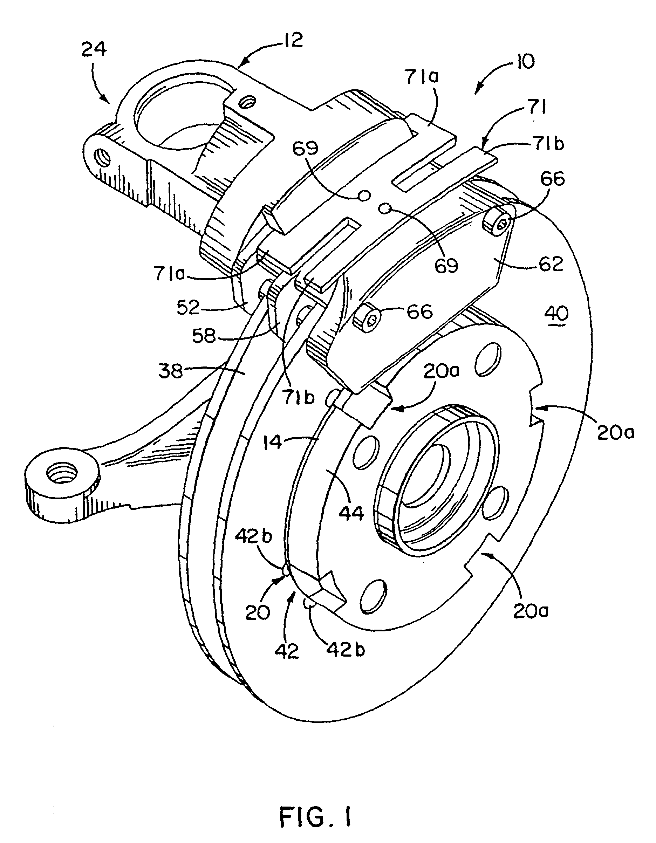

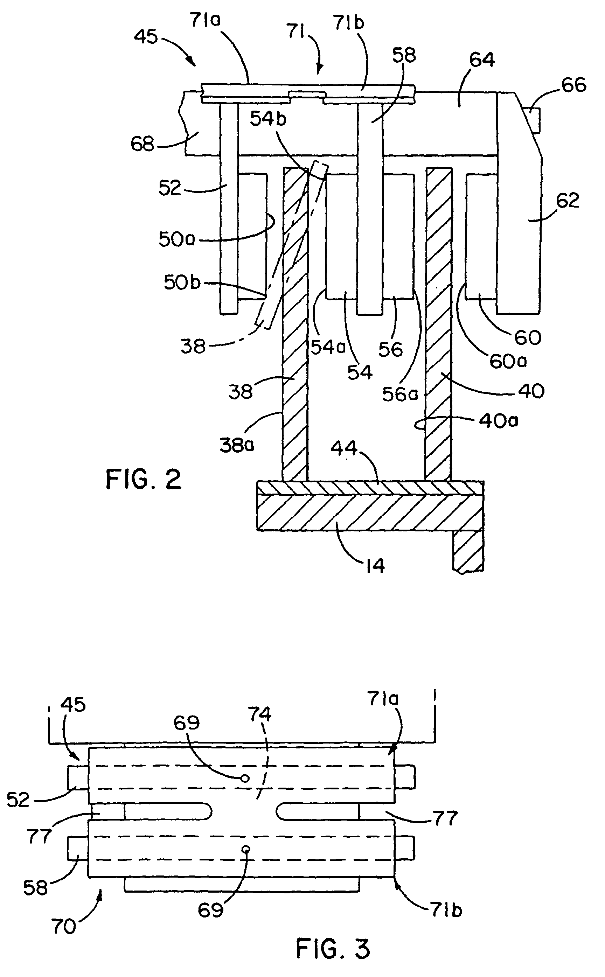

As shown in the drawings for purposes of illustration, the invention is embodied in a slidable disc brake assembly 10 which can have either one slidable braking disc 38 or two or more slidable braking discs such as a pair of brake discs 38 and 40 (FIGS. 1 and 2) illustrated herein for.a front wheel drive car. In a front wheel drive automobile suspension and wheel assembly, as illustrated and described herein, the weight of the vehicle is concentrated at the front of the vehicle and more brake torque is applied to the front wheels than is applied to the rear wheels. It is contemplated that the rear wheel brake assembly will have only the single slidable disc; and a single pair of brake pads 50 and 60, while the front wheel brake assembly will have the second slidable disc 40 and additional brake pads 54 and 56 on a slidable, intermediate pad carrier 58. The present invention is directed to and claims a slidable disc brake system that can have one, two or more slidable discs and that can be used in other applications than automobiles.

Conventional disc brakes or production vehicles have a single, fixed brake disc (not illustrated) and a single pair of brake disc pads and this requires considerable pressure, such as 70 BAR, to be applied between the pads and the fixed disc to generate the required braking torque. This higher pressure requirement has resulted in the use of braking assists, such as a vacuum assist or a vacuum pump, to generate sufficient braking force. This adds cost and weight to the vehicle and necessitates higher pressure in the brake conduits and stronger and more expensive brake fluid lines to handle the high pressure. The use of the second slidable disc and a second pair of brake pads with a doubling of the engaged brake surfaces provides a braking assembly that works at 50% of the conventional pressure, e.g., 35 BAR. Higher pressure causes more wear and higher temperatures, and it is desirable to reduce pressures for these reasons alone. Thus, the second slidable disc enables the braking torque to be shared among four (4) engaged, friction surfaces instead of the conventional two--thereby reducing pressure, heat generation and wear.

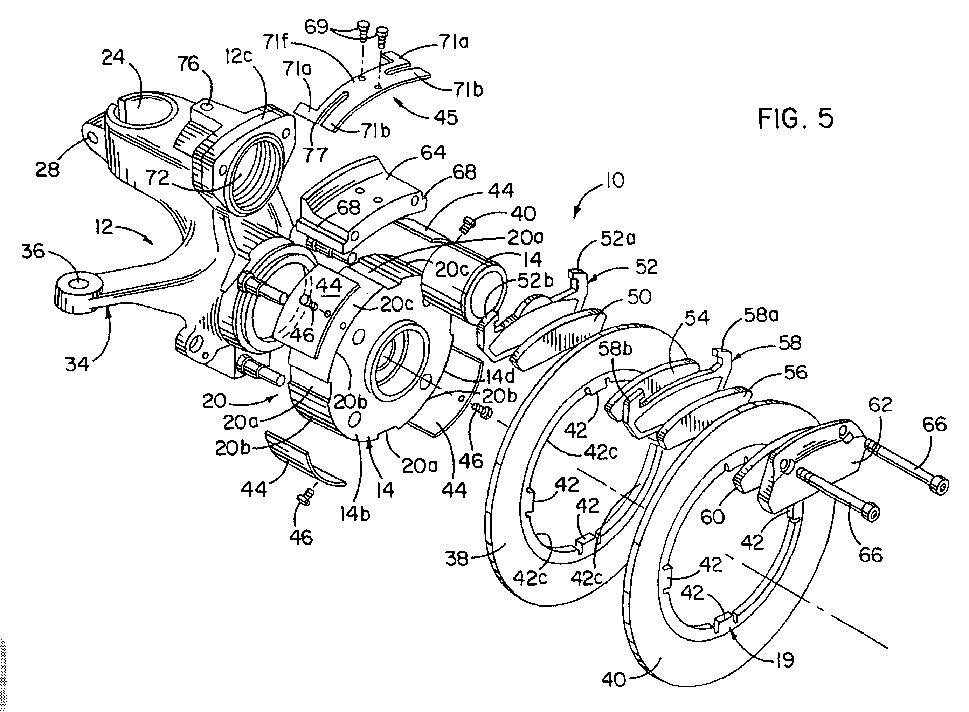

As disclosed in the patent literature, there is a problem of rattling and noise generation encountered between the slidable brake discs and the supporting hub on which they slide. As described above, the discs may be heated to 300°C. to 600°C. when being subjected to extreme braking conditions such as cornering and braking down a mountain or when being subjected to the fast and repetitive braking and/or cornering as in the AMS test. These prior slidable twin disc systems were equipped with various spring devices mounted on the hub to push the discs to rotate and to abut a driving side flank of a disc spline tooth against an adjacent, mating flank random nature, thereby resulting in a lower residual, off-brake torque and reduction of DTV. That is, a gentle random touching of the brake pads and brake disc may occur when driving straight ahead with the pads and disc being held in non-tilting positions relative to one another. The inner, radially directed, force applicator is positioned between the slidable disc, and the hub to provide friction forces to the hub and to the disc which holds them against sliding relative to one another and against generating a noise or a high squeal when the brake disc is heated and expanded. That is, when the brake disc was cold, no squeal or noise was generated at the spline interconnection. But, when the disc was heated and expanded, disc spline members or teeth 42 (FIG. 5) were loose and slid in hub splines 20 and generated high pitched squealing noises.

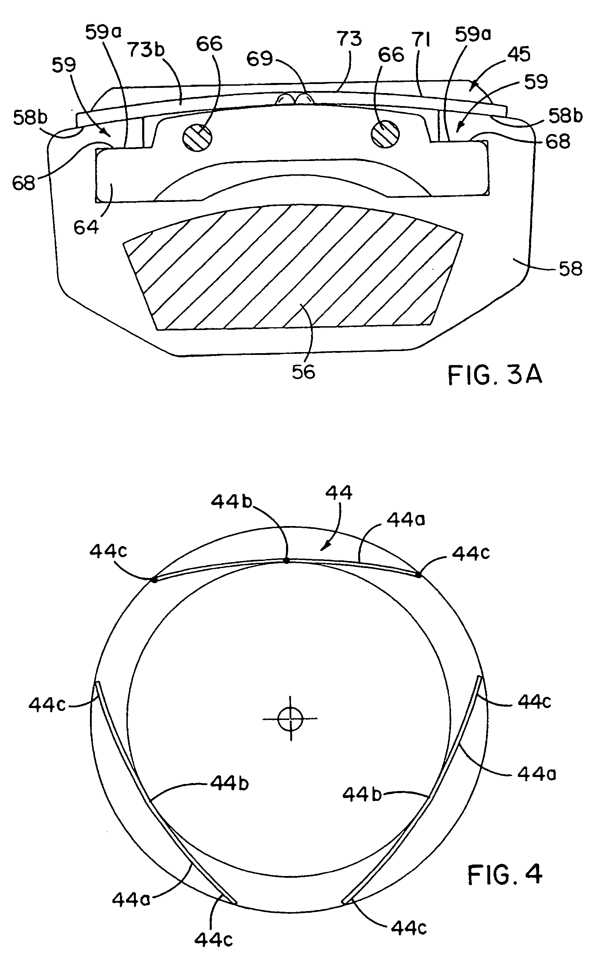

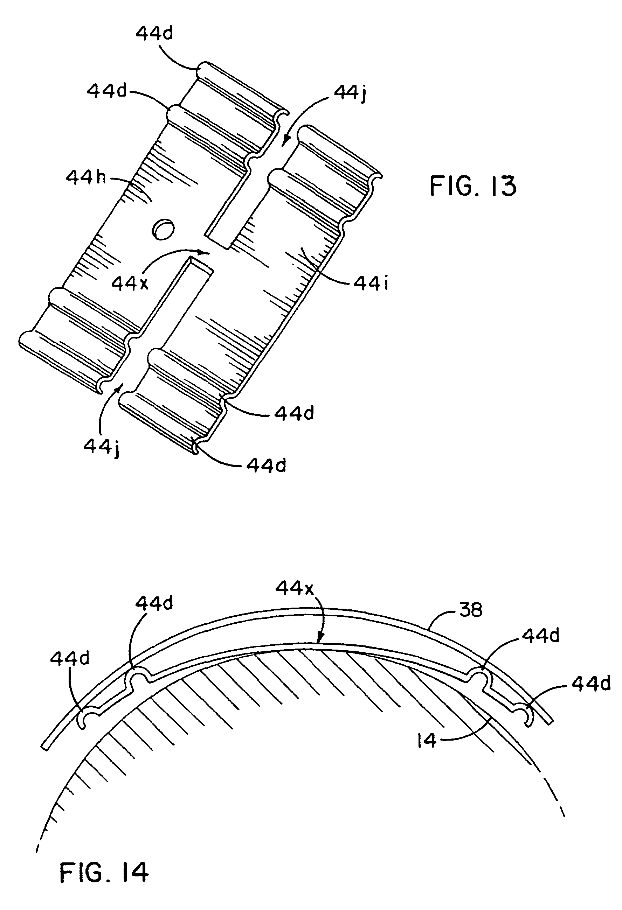

As will be explained in greater detail, the preferred radial, inner force applicator 44 comprises springs, preferably flat leaf springs 44a, that are laid tangentially of the hub at their centers 44b (FIGS. 4 and 5) and with their outer ends 44c biased into contact with inner hub surfaces at spaced points, as illustrated in exaggerated form in FIG. 4. More spaced points of contact can be provided by providing raised ribs 44d on the leaf springs 44x, as illustrated in FIGS. 13 and 14.

The slidable brake disc 38 is thus supported in a floating manner on points of contact 44c (FIG. 4) with the leaf springs 44a on the hub in a floating manner and the brake disc can be shifted axially with forces applied thereto to overcome the frictional forces being applied by the springs at inner disc hub surface. When the brake disc expands considerably due to a disc high temperature, the disc teeth become loose in the colder spline hubs and the frictional forces between the leaf springs 44a and the brake disc and hub restrain the disc from shifting relative to the hub and a resultant squealing noise. The driving slide flanks of a hub spline groove. The spline grooves in the hub were oversized relative to the size of disc teeth to prevent binding of the spline teeth in the spline grooves, and these oversized grooves allowed the discs to wobble at high braking pressures, as described in the aforesaid patent literature. When the braking pressure is released, the South African patent describes the use of release springs to push the brake disc axially along the hub. Axial directed spring pressures on the brake discs will increase the frictional off-brake, residual torque and should be avoided for this reason. It is a considerable problem to stabilize the slidable brake disc and yet allow the brake disc to slide freely at temperature extremes where the brake and the ambient temperatures are very low or very high after a considerable expansion of the disc particularly at its slidable driving connection to the colder hub. Also, the twin disc brake should have a lower off-brake, residual torque than that of the conventional fixed disc brake. Also, as explained above, for successful adoption by the automotive industry, the slidable twin disc brakes should meet the goals of a substantial reduction in cost, weight, space envelope; increased longevity of brake pads, and efficiency in manufacture, assembly and performance.

In accordance with the present invention, there is provided a slidable disc brake assembly having one or more brake discs 38, 40 which are mounted on a hub 14 of a suspension for a vehicle with the braking disc being constrained i.e., positioned on the hub 14, along its inner radial portion by a resilient radially directed force applicator 44 acting between the hub 14 and the brake disc and by an outer force applicator assembly 45 which is positioned at the outer rim of the disc. This construction provides a rotational geometry for the disc to have contact between the disc and the brake pads in a leaf springs 44a impart radially directed forces to the inner hub portion of the brake disc to keep it generally in a plane normal to its rotational axis through the center of the hub. This inner radial positioning by the springs 44a assists in keeping the disc 38 concentric with the rotational axis and within a relatively tight space envelope at the brakes off condition thereby reducing rubbing contact between the brake pad's frictional surfaces and the brake discs 38, 40 and a resultant disc thickness variation (DTV). DTV which is a major source of vibration.

In accordance with an important aspect of the invention, slidable brake discs 38 and 40 float on the hub 14 and its outer rim portion is constrained to its off-brake position, and each disc seeks or floats to an off-brake position established by engagement with slidable brake pads 50, 54 and 56, which slide on the guide surfaces 68 of the bridge-shaped guide member 64. As best seen in FIGS. 2, 3 and 3A, a brake pad, force applicator 71 is positioned to apply radially directed loads to the slidable brake pads to constrain them from sliding with predetermined spring forces. The spring forces are much stronger than that needed merely to prevent rattling or noise suppression. The spring forces are sufficient to restrain the slidable brake pads from moving into contact with the brake discs in an uncontrolled manner. It has been found that if only a light spring force is supplied to suppress noise, that the noise will be abated; but that the brake pads are free to shift and rub against the brake discs causing wear and DTV. Also, when using very light springs, the brake pads will not assist in positioning the outer rims of the slidable brake discs to reduce off-brake residual torque. The illustrated force applicator 71 comprises a pair of leaf springs 71a and 71b (FIGS. 2 and 5) which form the dual functions of preventing rattle and positioning of the pads and discs relative to each other.

After the brake has been applied and released, the rotating brake disc 38 initially rubs against the brake pads and forces from this rubbing cause the disc pads 50 and 56 to slide in opposite directions from the rotating disc. The amount of shifting is controlled by the brake force applicator's frictional force being overcome. Conversely, the off-brake, residual torque position of the rotating brake disc 38 is being constrained by the forced-apart brake pads, which are being held against further sliding by the force applicators. The force applicator springs 44 also are controlling any lateral sliding of the brake disc 38 along the hub. The brake disc 38 is being constrained in its off-load position by the outer force applicators acting on opposite sides of the pair of discs and the inner springs 44 acting on the inner hub portion of the discs. Thus, the disc is controlled to be free to slide and float but not to topple into the brake pads and the brake pads have controlled sliding but are not free to topple or to be free to vibrate into or bang against the discs.

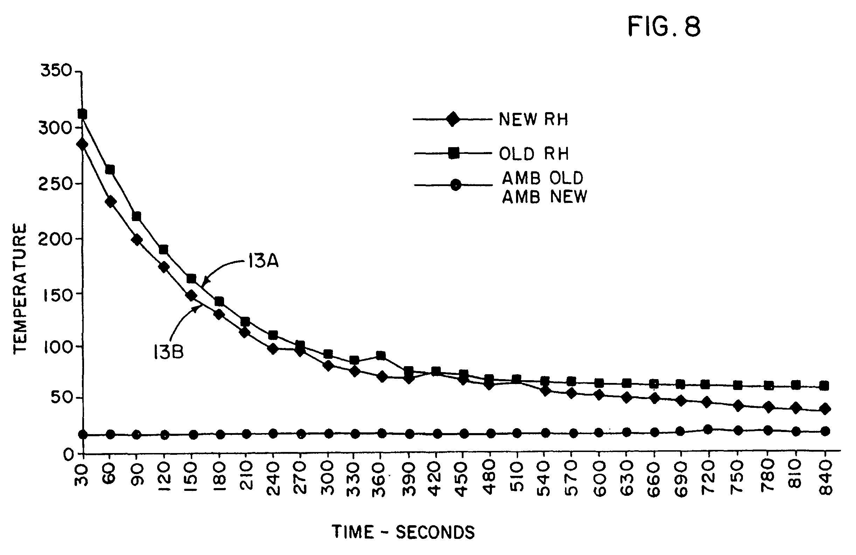

The twin disc brake assembly 10 of the present invention, because of its floating geometry as described above, has a significantly lower drag torque, i.e., off-brake residual torque, as will be explained in connection with FIG. 8 which illustrates a typical result for the disc temperature curves from 100 Kph. for a slidable, twin disc brake versus a conventional, fixed disc brake. The conventional fixed brake curves 13A plateaus at best is 35°C above ambient while the slidable, twin disc brake 10 continues to cool and stabilizes at 10° above ambient, as illustrated by the straight line 13B. Usually, the conventional brake was found to be about 50°-70°C above ambient. The assumption made with respect to this test is that dynamic drag due to disc face contact with the pad is proportional to temperature at the disc. The present invention is designed to preferably produce a low residual torque, e.g., about 1 newton meter or less in contrast to about 6 newton meter for the fixed disc brake on the vehicle being tested herein.

In accordance with the invention, the brake discs 38 and 40 must be flat and planar in their rotational plane and substantially normal to the rotational axis 9 (FIG. 2). The brake disc pads have outer planar surfaces 50a, 54a; 56a and 60a which are held by the springs 71a and 71b to be parallel to the disc annular braking surfaces 38a and 40a at the outer rim portion of the brake discs 38 and 40. When the disc geometry is slightly curved, i.e., not a flat planar surface, it has been found that localized rubbing and wear occurred, as illustrated in FIG 2, at a lower corner 50b of the cylinder brake pads 50 and at the upper outer corner 54b of the opposed brake pad 54 on the slidable pad carrier 58. FIG. 2 shows a very exaggerated tilted disc 38 in lines to illustrate the point being made. The non-flat brake disc did not have random contact with the brake discs 38 and 40; but had localized rubbing contact due to the disc curvature at the inner and outer corners 50b and 54b during each or almost each revolution of the brake disc. Severe disc thickness variations resulted and vibrations of the brake occurred. When the non-flat discs were replaced with flat brake discs the random engagement of the pads and discs was again achieved, the DTV and vibrations associated with the DTV were eliminated. If a localized spot carries the load, you get wear and a pumping action at wheel frequency.

While not illustrated herein, it was found that if the slidable brake pad surfaces 50a, 54a, and 56a (FIG. 2) were not held in parallel relationship to the brake disc faces 38a and 40a, but were freely mounted or loosely mounted on the bridge, that the brake pads could tilt or cock and cause DTV and resultant vibration, as described above for a non-flat brake disc. Stated differently, the springs 71a and 71b were strong enough to hold the brake pads against a tilting that would shift their planar pad surfaces 50a, 54a and 56a from planes perpendicular to the rotational axis 9 and would bring a corner thereof into continual, localized rubbing contact with a brake disc in the off-brake position. Thus, the floating geometry for the brake discs and constraint of the brake pads and discs to achieve random contact at the off-brake position is an important aspect of the invention.

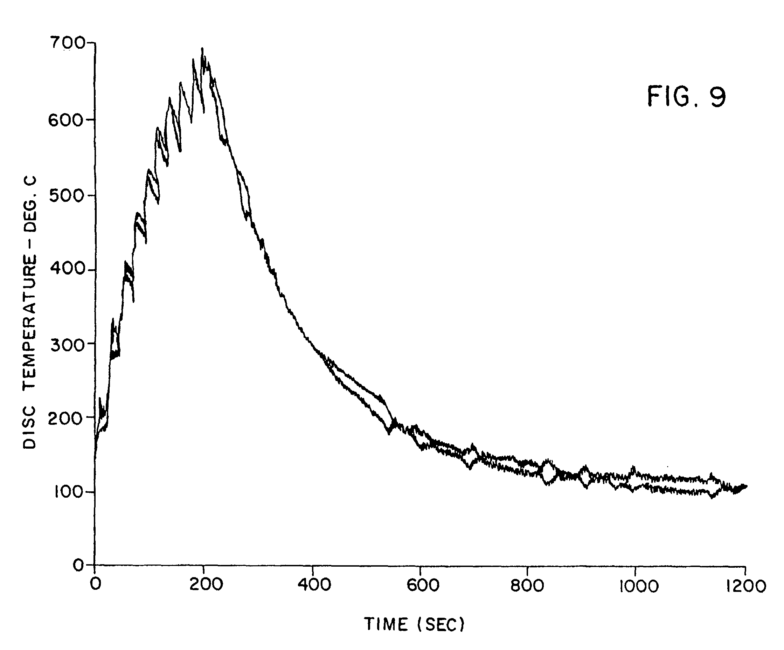

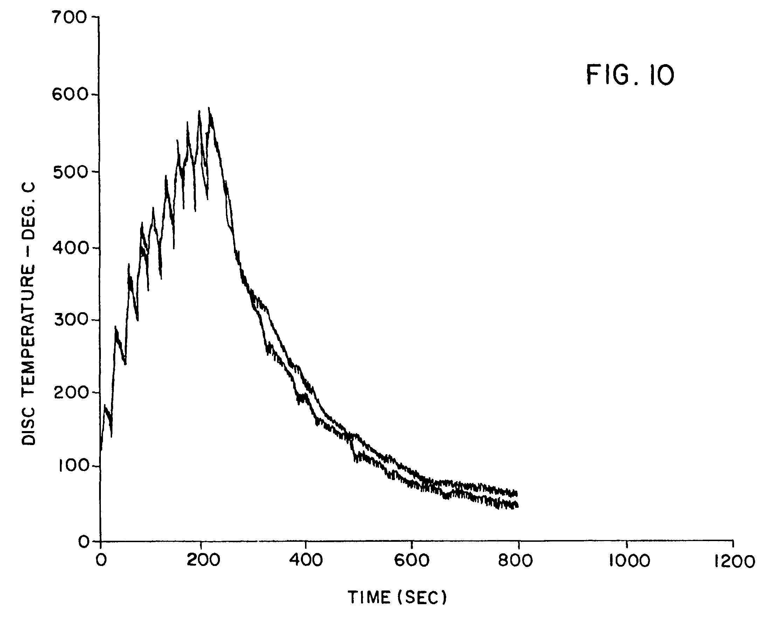

AMS fade tests were run to compare the performance of a slidable, twin disc brake assembly 10 versus the standard factory equipped fixed brake disc, and the results are shown in FIGS. 9 and 10. As seen in FIG. 9, there are ten peaks on the graph for each of the ten braking stops with the brakes cooling and showing a temperature drop of about 30°C and a maximum disc temperature of about 700°C which is the Judder range. In contrast, the twin slidable brake disc system had a maximum temperature of 580°C (FIG. 10) or about 120°C lower than the conventional disc brake. The temperature drop between braking events was about 80° compared to only a 30°C temperature drop for conventional disc brake. Thus, the present invention passed the AMS fade test where the conventional brake being tested did not pass the AMS test.

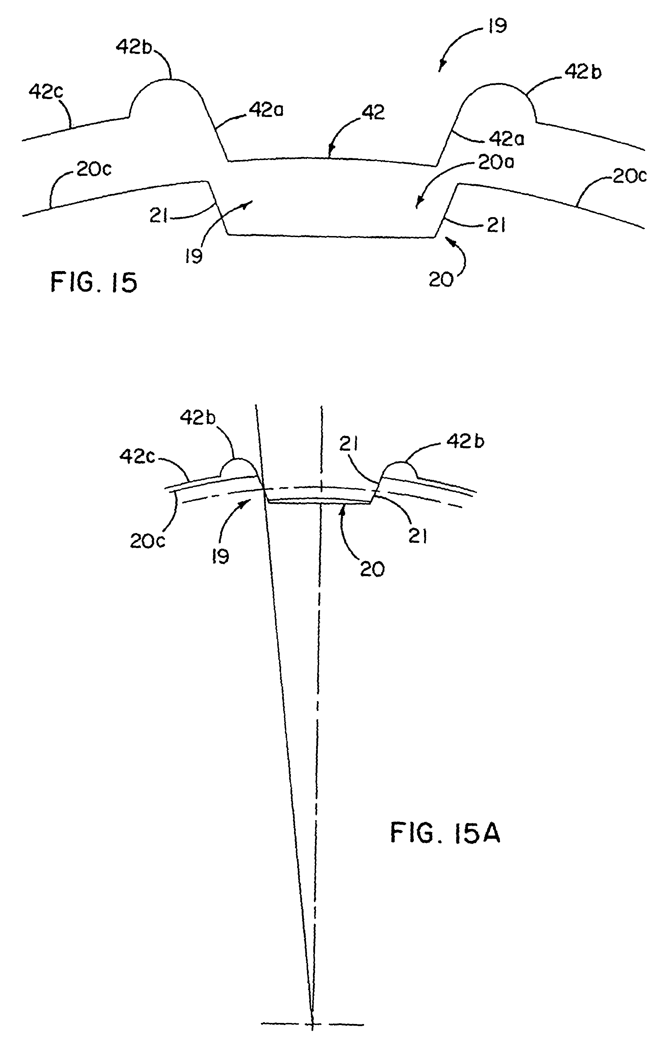

In accordance with the present invention, the preferred drive connection 19 has the brake disc teeth 42 sized to fit the grooves 20 along both of the groove flanks 21 without using oversized grooves. This is in contrast to the prior art which used oversized spline grooves and small springs therein to engage the driving side flanks of the hub and disc; but this prior art solution led to other problems like disc wobble on the hub. Preferably, the driving connection of the present invention is a very efficient one such as that akin to a pair of meshed gears where the contact is a line of contact across the engaged flanks 21 (FIG. 15A) rather than a small point of contact to provide lower unit pressures. Preferably, this line of contact is maintained whether the brake disc has a high or low temperature. The plastic deformation at the engaged spline surfaces keeps the engaged spline members clean from corrosion. The present invention eliminates the brinneling, dust generation, and squirming of the disc at high braking torque.

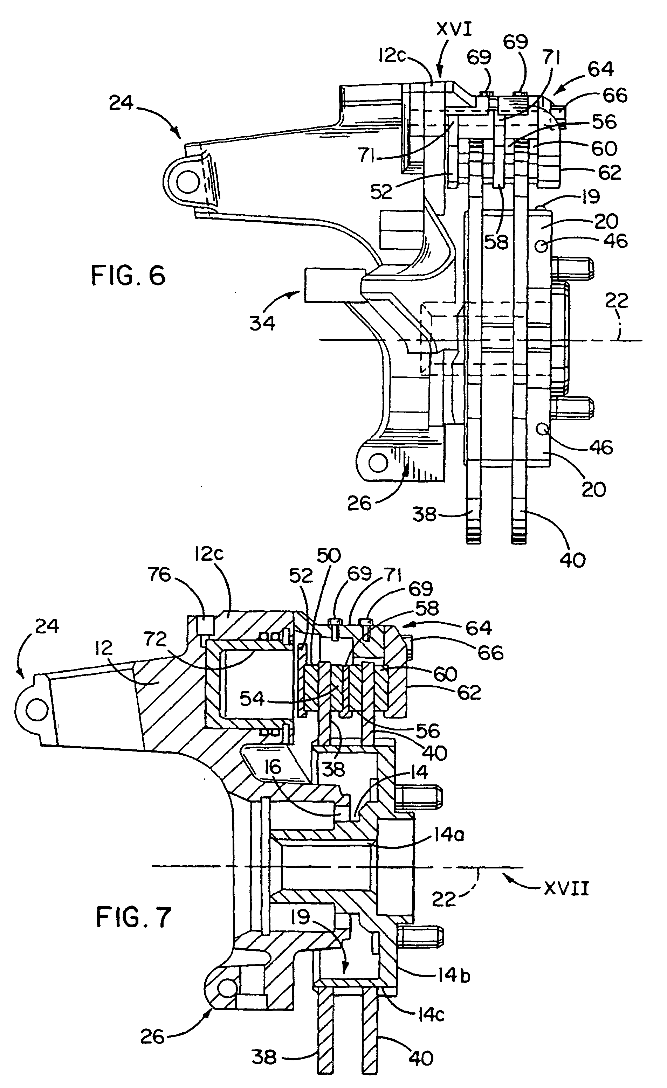

The hub 14 is an integral casting and, as is conventional, has a hollow cylindrical rearward projection 14a which has a splined interior, and an exterior, which provides a mounting for roller bearings 16 (FIG. 7). A splined projection of a constant velocity joint (not shown) at the end of a drive shaft is received within the projection so that the hub can be rotated on the bearings 16 by the drive shaft. The hub also has an annular disc-like portion 14b from which the portion projects rearwardly. The hub provides a mounting for the wheel (not shown) which is bolted against a forward surface of the portion by bolts received in holes 14d. The hub also has a hollow cylindrical rearward projection 14c of greater diameter than the portion. The portion projects from the outer edge of the portion 14b. The portion 14c has an outer surface provided with grooves 20 running parallel to the axis 22 about which the hub rotates. The grooves 20 are arranged in four equally circumferentially-spaced locations.

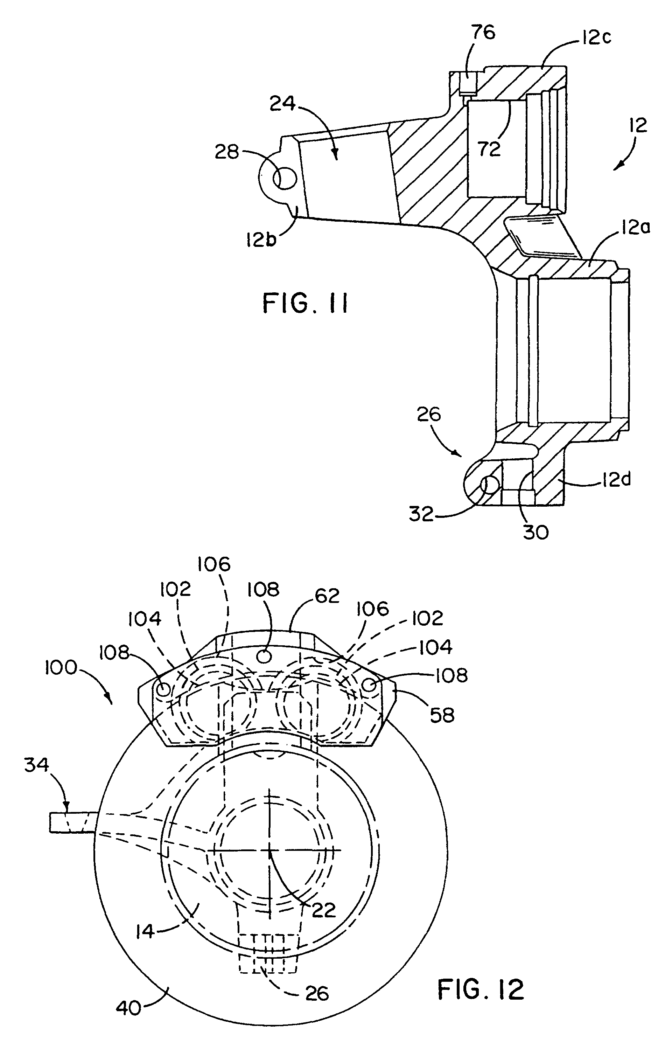

The suspension link 12 (FIG. 11) is an integral casting and comprises a hollow cylindrical portion 12a of conventional form, which provides a mounting for the bearings 16 so that the hub 14 rotates on the link. The link also comprises top 24 and bottom 26 mountings for supports of the link. The top mounting is provided by a portion 12b of the link which projects rearwardly from a portion 12c which projects upwardly from the portion 12a. The portion 12b is of conventional form and forms two semi-cylindrical arms (FIG. 5) which together form a clamp which can be tightened by a bolt (not shown) which extends through bores 28 in the arms and across a gap between them. A McPherson strut (not shown) can be clamped between the arms of the portion 12b so that the link can pivot about the longitudinal axis of the strut.

The bottom mounting 26 is provided by a portion 12d of the link 12, which projects downwardly from the portion 12a thereof. This portion 12d is of conventional form and has a vertical bore 30, to receive a pin cf a ball joint (not shown), and two horizontal bores 32 in which bolts (not shown) can be received to connect the link to a tie bar (not shown).

The link 12 also comprises an arm 34 for connection to a track rod (not shown) of a steering system of the vehicle. This arm 34 is of conventional form and is provided by a portion 12e of the link 12, which projects sideways from the portion 12a thereof. The arm 34 comprises a vertical bore 36 through which the arm can be pivotally connected to the track rod. In order to steer the vehicle, the track rod is moved to cause the link to pivot on the joint 18 and the mountings 24 and 26.

The illustrative assembly 10 also comprises the two brake discs 38 and 40, which are mounted for rotation with the hub 14. The two discs are identical to one another and are mounted for limited movement on the hub 14 in a direction generally parallel to the axis 22 about which the hub rotates. Specifically, each disc is in the form of a flat annular plate and has inwardly-projecting teeth 42. As best seen in FIGS. 5, 15 and 15A, it is preferred that the brake discs 38 and 40 each have a limited number of wide teeth, i.e., the illustrated four teeth 42 that mesh with the spline grooves 20a of splines 20 on the hub. The spline grooves 20a are four in number, in this instance, and have flanking walls 21 (FIG. 15) that match flanking walls 42a on brake disc teeth 42. The engaged flanks 21 and 42a have an angle A for their respective tooth flange angles. Manifestly, the number of teeth and splines may be varied. Because of large stresses generated on the thin teeth 42 on these relatively thin brake discs, there is a tendency of stress cracks to form, particularly after high temperature heating and cooling cycles and high stress cycles. To relieve such stress, there are provided large, curved, stress relief fillets or cut-outs 42b in the respective brake discs. Herein, as shown in FIGS. 15 and 15A, the stress relieving fillets are provided on each side of a tooth 42 and provide generally semi-cylindrical, cross-sectional openings on each side of each tooth, when the teeth are fitted into a spline grooves, as shown in FIG. 15A.

As best seen in FIG. 5, the four grooves 20 on the hub are relatively small compared to the projecting teeth 20b defined between each pair of adjacent grooves 20. These teeth 20b on the hub have large, arcuate surfaces 20c against which are laid the leaf springs 44. Thus, each leaf spring 44 has a large circumferential area contact with inner, arcuate surfaces 42c of the brake disc in the place between depending teeth 42 thereon.

Four leaf springs 44 are mounted on the hub 14 to provide resilient force applying means to apply radial forces between the hub and the discs 38 and 40. These radial forces prevent the discs from tilting on the hub, prevent rattling and control sliding of the discs along the hub. The resilience of the springs allows thermal expansion to be accommodated, as explained above. The springs are secured in a suitable manner, such as by screws 46 to the outer surface 20c of the hub portion 14c in the gaps between the spline grooves 20a. Each of the four springs engages both of the discs 38 and 40 in the areas between the teeth 42, giving a resilient four-point mounting for each disc. The discs can slide on the hub parallel to the axis 22 with the teeth sliding in the spline grooves 20a.

As best seen in FIG. 4, the flat leaf spring 44 is engaged with and has a pressure line of contact with the hub at point 44b; and the outer ends of the spring 44c have been flexed downwardly to provide pressure line of contact engagement with the discs 38 and 40 at these bent spring ends. Only three springs 44 are shown in the diagrammatic illustration of FIG. 4 to illustrate the flexing of the springs 44; while in the embodiment of the invention described and illustrated in FIG. 5, four springs are used. In order to provide more lines of engagement between the disc and the hub, the spring 44x may be provided with ribs 44d therein, as shown in FIGS. 13 and 14. Also, it is preferred to separate the spring 44 into separate biasing portions 44h and 44i (FIG. 13) separated by a slot 44j each portion acting on an associated disc 38 or 40 to provide more individualized, independent pressure forces between the associated disc and the hub. The springs 44 are balanced in the force they apply to the brake discs 38 and 40 relative to the force which the springs 71a and 71b apply to the slidable brake pad carriers 52 and 58. Both the brake discs and the brake carriers are constrained against shifting along the hub and the bridge respectively, due to vibrations and inertial forces from the vehicle when it is traveling. Thus, it will be seen that the springs 44 allow the slidable brake discs to: float on the hub, hold the discs in a radial plane normal to the rotational axis, apply frictional forces that prevent squealing; apply frictional forces that aid in holding the discs in position while rotating in their off-brake positions; and permit axial forces from the force actuator to outwardly slide the discs to their braking position with engagement of the disc 40 with the stationary brake pad 60.

The illustrative assembly 10 also comprises the friction material pads arranged on opposite sides of each of the discs 38 and 40. These pads comprise the first pad 50 which is mounted on a backing plate 52 and is arranged to engage a side surface of the disc 38, pads 54 and 56, which are mounted on opposite sides of a backing plate 58 and are arranged, respectively, to engage the opposite side surface of the disc 38 and a facing side surface of the disc 40, and the pad 60 which is mounted on a backing plate 62 and is arranged to engage the opposite side surface of the disc 40. The backing plate is fixedly mounted on a guide member or bridge 64, which is, in turn, fixedly mounted on the portion 12c of the link 12. Specifically, two bolts 66 pass through bores through the portion 12c and the guide member 64, and have threaded ends which are received in threaded bores in the backing plate. The stationary guide member 64 provides two guidance surfaces 68 on which the backing plates 52 and 58 slide. The guidance surfaces 68 extend, parallel to the axis 22, along opposite sides of the member 64. The guidance surfaces may take other forms such as the shafts of the bolts 66.

Each guidance surface 68 receives a pair of concave, U-shaped projection or hooks of the pad carriers 52 and 58. As best seen in FIG. 3A, the slidable pad carrier 58 has hook-shaped projections 59 with inner sliding surfaces 59a, which are slidably supported on the upwardly-facing support surfaces 68 of the bridge 64. To assist in achieving the desired balance to allow the brake pad carriers 52 and 58 to be pushed apart from and by the brake discs 38 and 40, when they are shifting axially from their brakes-on to their brakes-off positions; and yet constrain the pad carriers and their brake pads from tilting, it is preferred to machine flat the inner sliding surfaces 59a on the carriers and the supporting surfaces 68 on the bridge. Flat machined surfaces on the carriers engaging flat machine surfaces on the bridge assures a more uniform, frictional, constraining force to retain the brake pad carriers against axial sliding from their off-brake positions. Also, the carriers will have broader, wider engagement with bridge supporting surfaces 68 to assist in preventing significant rocking or tilting on the bridge under vehicle inertial forces and/or vibrations when the vehicle is moving, as would cause localized rubbing contact in the off-brake condition.

If the slidable brake pad position is not controlled, the slidable brake pad may tilt to engage or to vibrate against the slidable brake disc and generate a random wear pattern on the disc causing DTV and vibration of the disc. The control of the slidable pad and disc is important in a very dynamic situation with the vehicle wheel carrying the slidable brake system over bumpy or smooth roads, cornering with brakes on, cornering with brakes off, with ABS system on, with an ABS system off, etc. On cornering, the hub deflects and moves the disc surface to engage the brake pad; and after cornering, the pad and disc separate as the brake recovers to its steady state of low residual torque at the off-brake position. In the embodiment of the invention, illustrated in FIGS. 2, 3 and 3A, the preferred force applicators comprise flat leaf springs 71a and 71b that have been bent from their flat planar condition to a bow configuration in which outer edges 71c and 71d of the springs abut top end surfaces 52a, 52b, 58a, 58b of the respective slidable brake carriers 52 and 58. The center portion of the leaf spring 71a is secured by a suitable fastener, such as screws 69 threaded through the spring and into the stationary bridge 64 at a central location on the top of the stationary bridge 64.

The force applicator 71 may take many forms, and it is herein illustrated in FIG. 3 as having the two separate leaf spring portions 71a and 71b, each of which is separately applied resilient, biasing forces to its associated brake pad holder 52 or 58. The leaf spring portions 71a and 71b are preferably connected by a short integral, central web 71f, which is located between a pair of facing, elongated slots 77 dividing the spring leaf into the two discrete spring force applicator sections. Thus, if one brake pad holder has high points thereon or other force mitigating or amplifying factors affecting it and its associated spring; the other brake pad holder and its associated spring should be isolated therefrom.

In the illustrated embodiment of the invention, the brake actuating force used to brake the vehicle is from a brake actuator which is in the form of a hydraulic piston and cylinder assembly 75, although it is contemplated that the actuating force could be from a brake by wire actuator. In a brake-by-wire system, an electric motor drive assembly would force the movable brake pad carriers 52 and 58 to carry the slidable brake pads into their respective braking positions and slide the brake discs axially along the hub 14 into their respective braking positions.

The illustrative force actuator system comprises a piston and cylinder assembly operable to urge the pads 50, 54, 56 and 60 into engagement with opposite side surfaces of the discs 38 and 40 to brake the hub 14 and hence, the wheel. The piston and cylinder assembly comprises a cylinder 72 which is defined by the portion 12c of the link 12. Thus, the cylinder is formed integrally with the remainder of the link. A brake-by-wire actuator such as an electric motor could be mounted in the cylinder 72 rather than the piston 74. Herein, the piston 74 of the assembly projects from the cylinder and engages the backing plate 52 on the opposite side thereof to the pad 50. The piston and cylinder assembly is operated by supplying hydraulic fluid under pressure to a bore 76 in the link portion 12c which communicates with the cylinder. Herein, the hydraulic pressure for operating the twin disc brake system was about 30 to 35 BAR which is one-half of the 70 BAR pressure of the conventional fixed disc brake on the other test vehicle. The piston had a face of about 200 mm in area. The piston moves out of the cylinder moving the backing plates 52 and 58 and the discs 38 and 40 until the disc 40 engages the pad 60, which does not move.

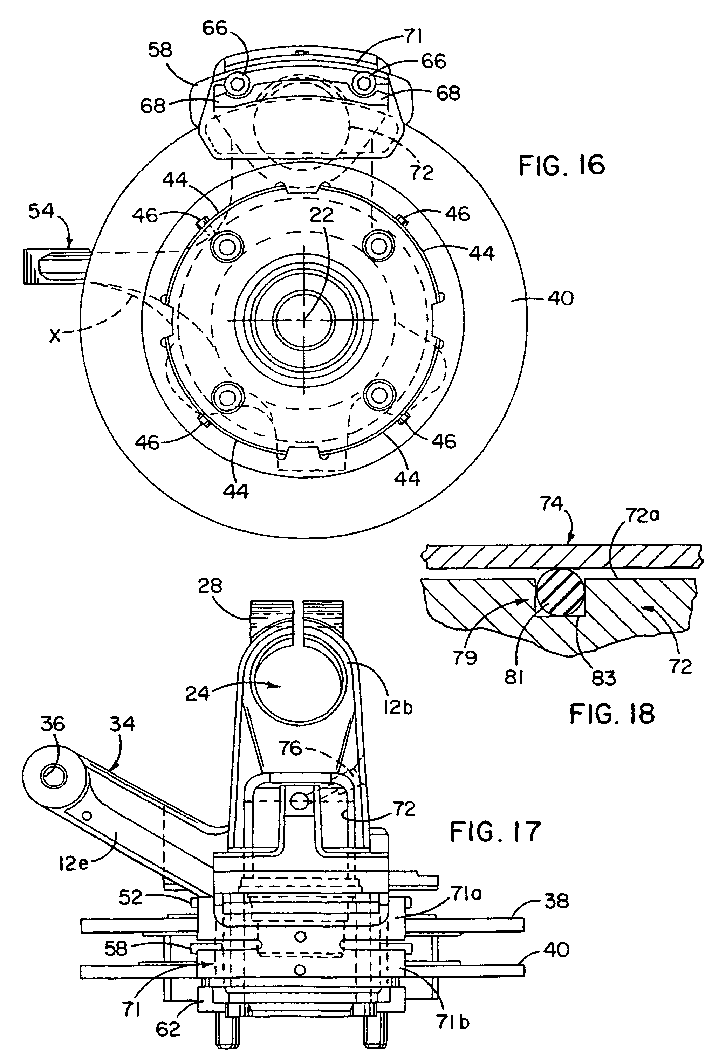

The hydraulic piston and cylinder assembly 75 includes a seal 79 (FIG. 18) which acts between the cylinder 72 and the piston 74 to prevent egress of hydraulic fluid from the cylinder. This seal is provided by an elastomeric sealing ring 81 (FIG. 18), which is mounted in an annular groove 83 formed in a cylinder wall 72a, the ring projecting from the groove to engage the piston. This sealing ring 81 also serves as an energy storing mechanism. Specifically, when the assembly is operated to move the piston outwardly of the cylinder to put the brake "on", the ring is compressed thereby storing energy therein. When the pressure of the hydraulic fluid in the cylinder is reduced, the ring releases the stored energy therein by moving the piston inwardly of the cylinder (away from the brake disc). Accordingly, the sealing ring has to engage the piston with a significant force. Movement of the piston away from the disc allows the movable pads 50, 54 and 56 of the brake to be moved away from the disc by forces exerted thereon by the rotating slidable brake discs 38 and 40 overcoming the force of the spring 71a and 71b; thereby putting the brake into a "brakes-off" condition.

The return of the piston 74 by the seal 81 reduces the off-brake torque because there is no significant force being applied by the piston to the brake carrier 52 and its brake shoe 50 relative to the facing side of the slidable brake disc 38. Conversely, the floating brake discs 38 and 40 are constrained and float on the hub 14 and will not shift the piston inwardly into the cylinder to displace hydraulic fluid, in the cylinder causing "knock-back" during cornering or other dynamic movements of the wheel assembly. The reduction of knock-back provides a better feel to applying the brakes with less fluid displacement, and eliminates the occasional long pedal displacement feel where substantial fall-back has occurred.

From the foregoing, it will be seen that the present invention provides a much smaller disc brake assembly without the very large caliper sliding and bolts as in the conventional, fixed disc brake. The caliper is large because it carries the cylinder and piston and the slidable bridge must withstand and transfer the large torque brake loads. The present invention is smaller because the cylinder can be integrated with the support and the bridge does not slide and carry the piston. Because of knock back and other problems, this large fixed brake is usually mounted at about 3:00 or 9:00 o'clock positions whereas in the present invention the brake is mounted at the top of the unit at the 12:00 o'clock position. The stiffness problem of the bridge with its deflection, e.g., 0.006 inch, is reduced by a factor of four when using four brake pads and one-half the hydraulic line pressure allowing a smaller and lighter weight brake assembly. The time of mounting and assembly of the brake, as well as repair or replacement, is enhanced because of the front bolting and the telescopic sliding of the brake discs and of the brake components versus the bolt from the rear or behind of the fixed brake bolts on which the caliper slides.

FIG. 12 is similar to FIG. 16 but illustrates a variation 100 of the illustrative assembly 10 in which like parts to those of the assembly 10 are given the same reference numerals and are not further described. The assembly 100 differs from the assembly 10 in that, instead of the cylinder 72, the portion 12c of the link 12 has two parallel cylinders 102 formed therein. In this case, each of the cylinders 102 has a smaller transverse cross-sectional area than the cylinder 72, but the total area of the cylinders 102 is greater. Each of the cylinders 102 has a piston 104 therein and the pistons 104 cooperate in pressing the backing plate 52. In order to accommodate the two piston and cylinder assemblies, the guide member 64 is modified to arch over the pistons, as shown at 106 and the bolts 66 are replaced by three bolts 108. The use of two piston and cylinder assemblies enables greater force to be applied for the same pressure in the cylinders (or the same force to be applied for lower pressure) and this force can, on average, be applied at a greater distance from the axis 22. If desired, the two cylinders can be of different diameters, e.g., with the leading cylinder in the normal direction of rotation, being of greater diameter.

## Claims

1. A disc brake system (10) comprising a hub (14) being mounted for rotation about a central axis (22) through the hub;
at least one brake disc (38,40) having an inner portion slidably mounted on the hub (14) for sliding in a direction parallel to the central axis (22) of the hub (14) between a braking position and off-brake position;
a drive connection (19) between the hub (14) and the brake disc (38,40) to rotate the disc (38,40) with rotation of the hub (14) and to decelerate the rotation of the hub (14) when the disc (38,40) is in the braking position;
braking pads (50,54,56,60) including at least one slidable brake pad (50,54,56) comprising a slidable pad carrier (52,58) carrying a frictional pad surface thereon for applying braking torque to opposite sides of the brake disc (38,40) when in the braking torque position to decelerate the engaged brake disc (38,40) and thereby the hub (14);
a stationary support (64) mounting the slidable brake pad (50,54,56) for travel between an off-brake position and the braking position, the slidable pad carrier (52,58) of the slidable brake pad (50,54,56) being mounted for sliding on the stationary support (64);
a brake actuator (75) for sliding the slidable brake pad (50,54,56) and brake disc (38,40) into the braking position;
a disc force applicator (44) applying a radially directed force between the hub (14) and the inner portion of the brake disc (34,40) to cause friction between the hub (14) and disc (38,40) inner portion to retard their sliding axially relative to one another;
an outer rim portion on the braking disc (38,40) rotating while in the off-brake position and engaging the slidable brake pad's (50,54,56,60) friction surface to slide the pad (50,54,56) from the braking position to an off-brake pad position;
the slidable brake disc (38,40) floating on the disc force applicator (44) and slidable axially along the hub (14) from a braking position to an off-braking position relative to the braking pads (50,54,56,60); and
**characterised by**
the stationary support (64) having a flat machined, supporting surface (68.) thereon; and
the slidable carrier (52,58) of the braking pads (50,54,56,60) having machined flat slide surface (59A) thereon in sliding frictional contact with the machined, flat supporting surface (68) of the stationary support (64); and
the brake pad force applicator (71) comprising a spring pushing the slidable carrier's (52,58) machined slide surface (59a) against the stationary support machined supporting surface (68) to prevent tilting of the slidable carrier (52,58) on the stationary support (64), the brake pad force applicator (71) acting on the slidable brake pad (50,54,56) to apply a force to the slidable brake pad (50,54,56) at a level sufficient to substantially hold the brake pad (50,54,56) and friction pad surface thereof in a plane substantially parallel to a plane of the sides of the brake disc (38,40) to constrain the friction pad surface engaging the brake disc (38,40) to reduce tilting of the brake pad (50,54,56) on the stationary support and its rubbing on the brake disc (38,40) that would increase off-brake, residual torque in the off-brake condition.

2. A disc brake system (10) in accordance with Claim 1 wherein the brake pad force applicator (71) comprises at least one spring pushing on the brake pads (50,54,56) in a direction substantially normal to the rotational axis (22) of the brake disc (38,40) and normal to the path of travel of the brake pads (50,54,56) along the stationary support (64).

3. A disc brake system (10) in accordance with Claim 1 wherein the stationary support (64) comprises a bridge; and
the spring (71) is positioned over the brake pad carrier (52,58) and forces the brake pad carrier (52,58) downwardly against the bridge.

4. A disc brake system (10) in accordance with Claim 1 wherein two or more brake discs (38,40) are slidably mounted on the hub (14);
a central slidable brake pad (54,56) having opposed friction pads thereon is disposed between the twin brake discs (38,40) and is slidably mounted on the stationary support (64); and
the brake force applicator (71) comprises at least one spring to constrain the slidable brake pad (59) and the central slidable brake pad (54,56) and to assist in constraining the rims of the slidable twin disc brakes (38,40) in their off-brake position.

5. A disc brake system (10) in accordance with Claim 1 wherein in the off-brake position, the disc force applicator (44) holds the brake disc (38,40) in a first radial plane; and the brake pad force applicator (71) holds its friction pad surface (50a,54a,56a) in a second radial plane parallel to the first radial plane to limit contact between the friction surface and brake disc to cause random kind of contact therebetween.

6. A disc brake system (10) in accordance with Claim 1 or Claim 5 wherein the brake pad force applicator forcing the brake pads (50,54,56) against the support (64) provides a predetermined frictional force therebetween sufficient to assist in positioning the outer rims of the brake discs (38,40) in an axial direction and position on the hub (14).

7. A disc brake system (10) in accordance with Claim 1 wherein the brake actuator (75) comprises a hydraulic cylinder (72) and a reciprocal hydraulic piston (74) in the cylinder (72); and
a compressible seal ring (79) in the cylinder (72) compressible by the piston (74) movement and storing energy to provide a return force to retract the piston (74) thereby permitting the brake pad (50,54,56) to shift axially along its stationary support (64) toward the cylinder (72) during rotation of the brake disc (38,40) in its off-brake position.

8. A disc brake system (10) in accordance with Claim 1 wherein the drive connection (19) between the disc (38,40) and hub (14) comprises intermeshed teeth (42,20).

9. A disc brake (10) system in accordance with Claim 1 wherein the brake pad force applicator (71) is also operable, when the slidable brake pad (50,56,54) is in its off-brake position, to prevent the slidable brake pad (50,56,54) from contacting the disc (38,40) by sliding axially on the stationary support (64).

10. A disc brake system (10) in accordance with Claim 8 wherein the teeth (42,20) on the brake disc (38,40) are provided with stress relief fillets at the junctures of the teeth (42,20) to the remainder of the brake disc (38,40).

11. A disc brake system (10) in accordance with Claim 1 wherein:
the disc (38,40) expands at higher temperatures and tends to slide axially relative to the hub (14); and
the disc force applicator (44) between the brake disc (38,40) and hub (14) comprises a spring applying friction forces for limiting the sliding of the expanded disc (38,40) on the hub (14).

12. A disc brake system (10) in accordance with Claim 4 wherein the brake pad force applicator (71) comprises separate springs each engageable with the slidable friction pad (50) and the central slidable friction pad (54,56).

13. A disc brake system (10) in accordance with Claim 1 wherein the residual, off-load torque allows the brake discs (38,40) to cool quickly to less than 20 degrees above an ambient temperature in the range of 10° to 20°C due to residual, off-brake torque.

14. A disc brake system (10) in accordance with Claim 1 wherein:
the brake pad force applicator (71) comprises a leaf spring positioned over the slidable carrier (52,58) and pushing the carrier's machined slide surface (59a) against the stationary machined supporting surface (68).

15. A disc brake system (10) in accordance with Claim 1 wherein the force applicators (44,71) hold the brake pad (50,56,54) and the brake disc (38,40) in parallel planes normal to the rotation axis (22) so that engagement of the disc (38,40) with the pad (50,56,54) with revolution of the pad is random and avoids rubbing at the same spot with each revolution as would cause wear and disc (38,40) thickness variations.

16. A disc brake system (10) in accordance with claim 1 wherein the braking pads (50,54,56,60) further include a stationary brake pad (60) which is fixed relative to the hub (14);
the actuator (75) also being operable to create sufficient clearance to allow the slidable brake pad (50,54,56) and disc to slide into the off-brake condition; and
the brake pad force applicator (71) acting on the slidable brake pad (50,54,56) wherein the forces applied to the disc (38,40) by the disc force applicator (44) and to the slidable brake pad (50,54,56) by the brake pad force applicator (71) are balanced so that the system can move from its braking condition to its off-brake condition by the action of separation forces between the disc (38,40) and the braking pads (50,54,56), the disc (38,40) sliding axially on the hub (14) by a first distance to thereby separate itself from the stationary brake pad; and the slidable brake pad (50,54,56) sliding on the stationary support (64) by a second distance, which is greater than said first distance, to thereby separate itself from the disc (38,40), the forces applied by the applicators (44,71) in the off-brake condition being sufficient to prevent axial sliding of the disc (38,40) causing contact with either braking pad (50,54,56), and to prevent axial sliding of the slidable pad (50,54,56) from causing contact between the disc (38,40) and the slidable pad (50,54,56).

17. A disc brake system (10) in accordance with Claim 16, including:
first and second discs (38,40);
a central slidable pad (54,56);
the forces being applied to the discs (38,40) by the disc force applicator (44) and to the slidable brake pads (50,54,56) by the brake pad force applicator (71) are balanced so that the system (10) can move from its braking condition to its off-brake condition by the action of separation forces between the discs (38,40) and the braking pads (50,54,56), the first disc (40) sliding axially on the hub (14) by a first distance to thereby separate itself from the stationary brake pad (60), the central slidable brake pad assembly (58) sliding on the stationary support (64) by a second distance, which is greater than said first distance, to thereby separate itself from the first disc (40), the second disc (38) sliding axially on the hub (14) by a third distance, which is greater than said second distance, to thereby separate itself from the central slidable brake pad (54,56), and the other slidable brake pad (56) sliding on the stationary support (64) by a fourth distance, which is greater than said third distance, to thereby separate itself from the second disc (38), the forces applied by the applicators in the off-brake condition being sufficient to prevent axial sliding of the discs (38,40) causing contact of either disc (38,40) with any of the braking pads (50,54,56,60), and to prevent axial sliding of the slidable pads (50,54,56) from causing contact between either disc (38,40) and either slidable pad (54,56,50).

18. A disc brake system (10) in accordance with Claim 17 wherein:
the pad force applicator (71) comprises at least one leaf spring pushing the sliding brake pads (50,54,56) against the stationary support (64); and
the disc force applicator (44) comprises at least one leaf spring disposed between the hub (14) and the slidable brake discs (38,40).

19. A disc brake system (10) in accordance with Claim 18 wherein:
the leaf spring of the pad force applicator (71) comprises separate leaf springs (71a,71b) pushing against the respective slidable brake pads (50,54,56); and
the disc force applicator (44) comprises a separate leaf spring disposed between each of the first and second brake discs (38,40).

20. A disc brake system (10) in accordance with claim 16 wherein the at least one brake disc (38,40) comprises;
a first and second brake discs (38,40);
the braking pads each (50,54,56,60) for applying braking torque to the disc (38,40) when in a braking position thereof, the braking pads (50,54,56,60) including a central slidable brake pad (54,56) between the first and second brake discs (38,40)
wherein the forces applied to the discs (38,40) by the disc force applicator (44) and to the slidable brake pads (50,54,56) by the brake pad force applicator (71) are balanced so that the system (10) can move from its braking condition to its off-brake condition by the action of separation forces between the discs (38,40) and the braking pads, the first disc sliding axially on the hub (14) by the first distance to thereby separate itself from the stationary brake pad (60), the central slidable brake pad assembly (58) sliding on the stationary support (64) by the second distance, which is greater than said first distance, to thereby separate itself from the first disc (40), the second disc (38) sliding axially on the hub (14) by a third distance, which is greater than said second distance, to thereby separate itself from the central slidable brake pad assembly (58), and the other slidable brake pad (50) sliding on the stationary support (64) by a fourth distance, which is greater than said third distance, to thereby separate itself from the second disc (38), the forces applied by the applicators (44,71) in the off-brake condition being sufficient to prevent axial sliding of the discs (38,40) causing contact of either disc (38,40) with any of the braking pads (50,54,56,60), and to prevent axial sliding of the slidable pads (50,54,56) from causing contact between either disc (38,40) and either slidable pad (50, 54, 56).

21. A disc brake system (10) in accordance with Claim 20 wherein a plurality of leaf springs are positioned between the hub (14) and the inner portion of each brake disc (38,40) to increase friction between the engaged surfaces of the drive connection (19) of the hub (14) and disc (38,40).

22. A vehicle braking and suspension system comprising:
a disc brake system in accordance with claim 1, and;
a vehicle suspension having a suspension member (12);
a wheel adapted to be carried by the vehicle suspension member (12);
a disc brake and wheel support assembly having a supporting suspension member;
the rotatable hub (14) mounted on the suspension member (12) for rotation about the central rotational axis (22) through the hub (14) and carrying the wheel for rotation about the rotational axis (22);
the brake actuator (75) for the disc brake (10) mounted on the supporting suspension member (12);
the stationary support mounting (64) comprising a stationary bridge on the suspension member;
an outer, fixed brake pad (60) mounted on the bridge for engaging one side of the brake disc (38,40) and;
the slidable brake pad (50,54,56) slidable by the brake actuator (75) to engage the friction surface thereon with the other side of the disc (38,40) and to slide the brake disc (38,40) axially along to the hub (14) from an off-brake, residual torque position to a on-brake position
in which the braking pads (50,54,56,60) are engaging opposite sides of the brake disc (38,40) to brake the disc (14), hub and wheel.

23. A vehicle braking system in accordance with Claim 22 wherein the brake actuator (75) for the disc brake (10) comprises a hydraulic cylinder (72) having a piston (74) for forcing the slidable brake pad (50,56,54) into the braking position;
a compressible seal ring (79) between the cylinder (72) and piston (74) exerts a return force on the piston (74) when the braking fluid pressure is relieved at the no-load braking position; and
the hydraulic cylinder (72) being mounted at an uppervertical position on the suspension (12).

24. A vehicle braking system in accordance with Claim 22 wherein:
a second brake disc (38) is mounted on the hub (14) for axial sliding movement thereon; and
a central brake pad carrier (58) having opposed friction pads is slidably mounted on the stationary bridge to engage facing sides of the respective brake discs (38,40);
the force applicator (71) holding the central pad carrier (58) in an off-brake, residual torque position relative to the rotating brake discs (38,40).

25. A vehicle braking system in accordance with Claim 22 wherein a friction force applicator is positioned between the brake disc (38,40) and the hub (14) to exert friction forces to assist the brake pads (50,54,56,60) in positioning the brake discs (38, 40) at off-brake, residual load positions

26. A vehicle braking system in accordance with Claim 22 wherein intermeshed splines (42) are formed on the brake disc (38,40) and the hub (14) to provide a positive drive connection therebetween; and
spring members are positioned between the hub (14) and the brake disc (38,40) to apply frictional forces to resist free sliding of the brake disc (38,40) on the hub (14) as the brake disc (38,40) is heated and expands and thereafter contracts when cooled.

27. A vehicle braking system in accordance with Claim 22 wherein the two brake discs (38,40) cool to less than 20°C. above ambient temperature when the ambient temperature is in the range of 10°C. to 20°C.

28. A vehicle braking system in accordance with Claim 22 wherein the rotating brake disc (38,40) and the brake pads (50,54,56,60) and the brake pad force applicators (71) position the brake discs (38,40) for randomly engaging the brake pads (50,54,56,60) at different locations, thereby preventing wear due to engagement at the same spot on the disc during each revolution as would cause disc thickness variation.

29. A method of disc braking employing inner and outer, annular brake discs (38,40) mounted on a rotatable hub (14) for axial sliding thereon and having a fixed caliper bridge (64) with brake pads (50,54,56,60) with four brake pad frictional surfaces (50a,54a,56a,60a) thereon for engaging opposite sides of the brake discs (38,40), said method comprising:
applying an actuating force on the slidable brake pads (50,54,56) to slide them along the bridge to a braking position to engage rims of the annular discs (38,40) with the four pad frictional surfaces (50a, 54a, 56a, 60a) to generate braking forces to decelerate the discs (38,40);
pushing the brake discs (38,40) by the slidable brake pads (50,54,56) along the hub (14) to engage an outer side of an outer brake disc (38,40) with a stationary brake pad (60) on the fixed bridge (14) at the braking position;
relieving the actuating force after braking;
exerting forces by the rotating brake discs (38,40) on the slidable brake pads (50,54,56) to overcome predetermined spring forces holding the slidable brake pads (50,54,56) against sliding to shift the brake pads to off-brake positions;
exerting spring forces between each of the brake discs (38,40) and hub (14) to assist in locating the brake discs (38,40) on the hub (14) at off-brake positions; and
**characterised in that** the method further comprises providing the caliper bridge and pads with cooperating machined flat slide mounting surfaces (59A) and exerting spring forces on the slidable brake pads (50,54,56) to push the cooperating machined flat slide mounting surfaces of the brake pads against the cooperating machined flat slide mounting surfaces (59A, 68) of the caliper bridge (68) brake pads, with said spring forces being at a level sufficient to substantially hold the brake pads (50,54,56) against tilting and to hold the friction surface of the brake pad substantially parallel to the plane of the sides of the brake disc (38,40) to thereby limit engagement between the rotating brake discs (38,40) and the brake pads (50,54,56) at their respective off-brake positions to only random engagement therebetween to minimize disc thickness variation due to rubbing and to minimize off-load, residual torque between the discs (38,40) and brake pads (50,54,56).

30. A method in accordance with Claim 29 including the providing of the disc brake assembly (10) on a vehicle suspension (12); and
maintaining the temperature of the brake discs (38, 40) due to off-brake residual torque to less than 20° above ambient temperature when the ambient temperature is in the range of 10° to 20°C. as the vehicle is being driven in a straight line path.

31. A method in accordance with Claim 29 including the providing of the disc brake (10) on a vehicle suspension (12); and
driving the vehicle through the AMS test and maintaining the temperature of the brake discs below 650°C.

32. A method in accordance with Claim 31 including the step of maintaining the brake disc (38,40) temperature below 600°C.

33. A method in accordance with Claim 29 actuating the brake pads (50,54,56,60) from a position above the rotational axis (22) through the hub (14) and in a vertical planeat a substantial 12:00 o'clock position.

34. A method in accordance with Claim 29 wherein the applying of the actuating force on the slidable brake pads (50,54,56) comprises moving a hydraulically operated piston (74) to force at least two slidable brake pads (50,54,56) and at least two slidable brake discs (38,40) to shift to the braking position.

35. A method in accordance with Claim 29 including the step of balancing the spring forces on the brake pads (50,54,56) and brake discs (38,40) to allow separation from one another to shift into an off-brake position and to hold them against tilting to prevent disc thickness variation of the brake discs (38,40).

## Patentansprüche

1. Scheibenbremssystem (10), umfassend eine Nabe (14), die drehbar um ihre zentrale Achse (22) montiert ist;
zumindest eine Bremsscheibe (38, 40) mit einem Innenabschnitt, der verschiebbar auf der Nabe (14) montiert ist, um in eine Richtung parallel zu der zentralen Achse (22) der Nabe (14) zwischen einer gebremsten Stellung und einer nicht gebremsten Stellung zu gleiten;
eine Antriebsverbindung (19) zwischen der Nabe (14) und der Bremsscheibe (38, 40), um die Scheibe (38, 40) mit einer Drehung der Nabe (14) zu drehen und die Drehung der Nabe (14) zu verlangsamen, wenn die Scheibe (38, 40) in der gebremsten Stellung ist;
Bremsbeläge (50, 54, 56, 60) mit zumindest einem verschiebbaren Bremsbelag (50, 54, 56), der einen verschiebbaren Belagträger (52, 58) umfasst, der eine Reibbelagfläche trägt, um in der Bremsmoment-Stellung Bremsmoment auf einander abgewandte Seiten der Bremsscheibe (38, 40) auszuüben, um die sich in Anlage befindende Bremsscheibe (38, 40) und somit die Nabe (14) abzubremsen;
einen feststehenden Träger (64), an dem der verschiebbare Bremsbelag (50, 54, 56) so montiert ist, dass er sich zwischen einer nicht gebremsten Stellung und der gebremsten Stellung bewegt, wobei der verschiebbare Belagträger (52, 58) des verschiebbaren Bremsbelags (50, 54, 56) verschiebbar auf dem feststehenden Träger (64) montiert ist;
einen Bremsbetätiger (75), welcher den verschiebbaren Bremsbelag (50, 54, 56) und die Bremsscheibe (38, 40) in die gebremste Stellung schiebt;
einen Scheiben-Kraftapplikator (44), der eine radiale Kraft zwischen der Nabe (14) und dem Innenabschnitt der Bremsscheibe (38, 40) ausübt, um Reibung zwischen der Nabe (14) und dem Innenabschnitt der Scheibe (38, 40) zu erzeugen und so deren axiale Verschiebung relativ zueinander zu verzögern;
einen äußeren Randabschnitt auf der Bremsscheibe (38, 40), der sich dreht, während er in der nicht gebremsten Stellung ist, und gegen die Reibungsfläche des verschiebbaren Bremsbelags (50, 54, 56, 60) anliegt, um den Belag (50, 54, 56) aus der gebremsten Stellung in eine nicht gebremste Belagstellung zu verschieben;
die verschiebbare Bremsscheibe (38, 40), die auf dem Scheiben-Kraftapplikator (44) schwimmt und entlang der Nabe (14) aus einer gebremsten Stellung in eine nicht gebremste Stellung relativ zu den Bremsbelägen (50, 54, 56, 60) axial verschiebbar ist; und
**dadurch gekennzeichnet, dass**
der feststehende Träger (64) eine flache bearbeitete Trägerfläche (68) hat; und
der verschiebbare Träger (52, 58) der Bremsbeläge (50, 54, 56, 60) eine flache bearbeitete Gleitfläche (59A) hat, die mit der flachen, bearbeiteten Trägerfläche (68) des feststehenden Trägers (64) verschiebbar in Reibungskontakt steht; und
der Bremsbelag-Kraftapplikator (71) eine Feder umfasst, welche die bearbeitete Gleitfläche (59a) des verschiebbaren Trägers (52, 58) gegen die bearbeitete Trägerfläche (68) des feststehenden Trägers drückt, um ein Kippen des verschiebbaren Trägers (52, 58) auf dem feststehenden Träger (64) zu verhindern, wobei der Bremsbelag-Kraftapplikator (71) auf den verschiebbaren Bremsbelag (50, 54, 56) wirkt, um eine Kraft auf den verschiebbaren Bremsbelag (50, 54, 56) auszuüben, die so stark ist, dass sie den Bremsbelag (50, 54, 56) und dessen Reibbelagfläche im Wesentlichen in einer Ebene parallel zu einer Ebene der Seiten der Bremsscheibe (38, 40) hält, um die an die Bremsscheibe (38, 40) anliegende Reibbelagfläche zu begrenzen und somit eine Kippen des Bremsbelags (50, 54, 56) auf dem feststehenden Träger und dessen Rubbeln auf der Bremsscheibe (38, 40) zu verhindern, das nicht gebremstes Restdrehmoment im nicht gebremsten Zustand erhöhen würde.

2. Scheibenbremssystem (10) nach Anspruch 1, wobei der Bremsbelag-Kraftapplikator (71) mindestens eine Feder umfasst, welche in einer Richtung auf die Bremsbeläge (50, 54, 56) drückt, die im Wesentlichen normal zu der Drehachse (22) der Bremsscheibe (38, 40) und normal zu dem Bewegungsweg der Bremsbeläge (50, 54, 56) entlang dem feststehenden Träger (64) ist.

3. Scheibenbremssystem (10) nach Anspruch 1, wobei der feststehende Träger (64) eine Brücke umfasst und
die Feder (71) über dem Bremsbelagträger (52, 58) angeordnet ist und den Bremsbelagträger (52, 58) nach unten gegen die Brücke drückt.

4. Scheibenbremssystem (10) nach Anspruch 1, wobei zwei oder mehr Bremsscheiben (38, 40) verschiebbar auf der Nabe (14) montiert sind;
ein zentraler verschiebbarer Bremsbelag (54, 56), der einander abgewandte Reibbeläge hat, zwischen der Doppelbremsscheibe (38, 40) angeordnet und verschiebbar auf dem feststehenden Träger (64) montiert ist; und
der Brems-Kraftapplikator (71) mindestens eine Feder umfasst, welche den verschiebbaren Bremsbelag (59) und den zentralen verschiebbaren Bremsbelag (54, 56) begrenzt und dazu beiträgt, die Ränder der verschiebbaren Doppelscheibenbremse (38, 40) in ihrer nicht gebremsten Stellung zu begrenzen.

5. Scheibenbremssystem (10) nach Anspruch 1, wobei der Scheiben-Kraftapptikator (44) in der nicht gebremsten Stellung die Bremsscheibe (38, 40) in einer ersten radialen Ebene hält; und der Bremsbelag-Kraftapplikator (71) seine Reibbelagfläche (50a, 54a, 56a) in einer zweiten radialen Ebene parallel zu der ersten radialen Ebene hält, um den Kontakt zwischen der Reibfläche und der Bremsscheibe einzuschränken und somit einen zufälligen Kontakt zwischen diesen zu veranlassen.

6. Scheibenbremssystem (10) nach Anspruch 1 oder 5, wobei der Bremsbelag-Kraftapplikator, der die Bremsbeläge (50, 54, 56) gegen den Träger (64) drückt, eine vorbestimmte Reibungskraft zwischen diesen bereitstellt, die so stark ist, dass sie dazu beiträgt, die Außenränder der Bremsscheiben (38, 40) in einer axialen Richtung und Position auf der Nabe (14) anzuordnen.

7. Scheibenbremssystem (10) nach Anspruch 1, wobei der Bremsbetätiger (75) einen hydraulischen Zylinder (72) und einen hin- und herbewegten hydraulischen Kolben (74) in dem Zylinder (72); und
einen komprimierbaren Dichtungsring (79) in dem Zylinder (72) umfasst, der durch die Bewegung des Kolbens (74) komprimierbar ist und Energie speichert, um eine Rückstellkraft bereitzustellen und somit den Kolben (74) zurückzuziehen und dadurch zu ermöglichen, dass sich der Bremsbelag (50, 54, 56) während der Drehung der Bremsscheibe (38, 40) in ihrer nicht gebremsten Stellung axial entlang seinem feststehenden Träger (64) zu dem Zylinder (72) verschiebt.

8. Scheibenbremssystem (10) nach Anspruch 1, wobei die Antriebsverbindung (19) zwischen der Scheibe (38, 40) und der Nabe (14) ineinandergreifende Zähne (42, 20) umfasst.

9. Scheibenbremssystem (10) nach Anspruch 1, wobei der Bremsbelag-Kraftapplikator (71) zudem betätigbar ist, wenn der verschiebbare Bremsbelag (50, 56, 54) in seiner nicht gebremsten Stellung ist, um zu verhindern, dass der verschiebbar Bremsbelag (50, 56, 54) mit der Scheibe (38, 40) durch axiales Gleiten auf dem feststehen Träger (64) in Kontakt gelangt.

10. Scheibenbremssystem (10) nach Anspruch 8, wobei die Zähne (42, 20) auf der Bremsscheibe (38, 40) mit Abrundungen zur Druckentlastung an den Verbindungsstellen der Zähne (42, 20) mit dem Rest der Bremsscheibe (38, 40) versehen sind.

11. Scheibenbremssystem (10) nach Anspruch 1, wobei
sich die Scheibe (38, 40) bei höheren Temperaturen ausdehnt und dazu tendiert, axial relativ zu der Nabe (14) zu gleiten; und
der sich zwischen der Bremsscheibe (38, 40) und der Nabe (14) befindende Scheiben-Kraftapplikator (44) eine Feder umfasst, die Reibungskräfte ausübt, um das Gleiten der ausgedehnten Scheibe (38, 40) auf der Nabe (14) einzuschränken.

12. Scheibenbremssystem (10) nach Anspruch 4, wobei die Bremsbelag-Kraftapplikator (71) separate Federn umfasst, die jeweils mit dem verschiebbaren Reibbelag (50) und dem zentralen verschiebbaren Reibbelag (54, 56) in Anlage gebracht werden können.

13. Scheibenbremssystem (10) nach Anspruch 1, wobei das nicht belastete Restdrehmoment den Bremsscheiben (38, 40) ermöglicht, schnell auf weniger als 20 Grad über Umgebungstemperatur in dem Bereich von 10° bis 20°C auf Grund des restlichen, nicht gebremsten Drehmoments abzukühlen.

14. Scheibenbremssystem (10) nach Anspruch 1, wobei:
der Bremsbelag-Kraftapplikator (71) eine Blattfeder umfasst, die über dem verschiebbaren Träger (52, 58) angeordnet ist und die bearbeitete Gleitfläche (59a) des Trägers gegen die feststehende, bearbeitete Trägerfläche (68) drückt.

15. Scheibenbremssystem (10) nach Anspruch 1, wobei die Kraftapplikatoren (44, 71) den Bremsbelag (50, 56, 54) und die Bremsscheibe (38, 40) in parallelen Ebenen normal zu der Drehachse (22) halten, so dass die Anlage der Scheibe (38, 40) an den Belag (50, 56, 54) bei Drehung des Belags zufällig ist und ein bei jeder Drehung entstehendes Rubbeln an derselben Stelle verhindert, das zu Verschleiß und unterschiedlicher Dicke der Scheibe (38, 40) führen könnte.

16. Scheibenbremssystem (10) nach Anspruch 1, wobei die Bremsbeläge (50, 54, 56, 60) ferner einen feststehenden Bremsbelag (60) enthalten, der relativ zu der Nabe (14) befestigt ist;
der Betätiger (75) zudem betätigbar ist, um genügend Spiel zu erzeugen, um zu ermöglichen, dass der verschiebbare Bremsbelag (50, 54, 56) und die Scheibe in die nicht gebremste Stellung gleiten; und
der Bremsbelag-Kraftapplikator (71) auf den verschiebbaren Bremsbelag (50, 54, 56) wirkt, wobei die Kräfte, die durch den Scheiben-Kraftapplikator (44) auf die Scheibe (38, 40) und durch den Bremsbelag-Kraftapplikator (71) auf den verschiebbaren Bremsbelag (50, 54, 56) ausgeübt werden, ausgeglichen sind, so dass sich das System durch Wirken von Trennkräften zwischen der Scheibe (38, 40) und den Bremsbelägen (50, 54, 56) aus seinem gebremsten Zustand in seinen nicht gebremsten Zustand bewegen kann, wobei die Scheibe (38, 40) mit einem ersten Abstand axial auf der Nabe (14) gleitet, um sich dadurch selbst von dem feststehenden Bremsbelag zu lösen; und der verschiebbare Bremsbelag (50, 54, 56) mit einem zweiten Abstand, der größer ist als der erste Abstand, auf dem feststehenden Träger (64) gleitet, um sich dadurch selbst von der Scheibe (38, 40) zu lösen, wobei die durch die Applikatoren (44, 71) in dem nicht gebremsten Zustand ausgeübten Kräfte ausreichen, um zu verhindern, dass ein axiales Gleiten der Scheibe (38, 40) einen Kontakt mit einem der Bremsbeläge (50, 54, 56) bewirkt, und um zu verhindern, dass ein axiales Gleiten des verschiebbaren Belags (50, 54, 56) einen Kontakt zwischen der Scheibe (38, 40) und dem verschiebbaren Belag (50, 54, 56) bewirkt.

17. Scheibenbremssystem (10) nach Anspruch 16, umfassend:
eine erste und eine zweite Scheibe (38, 40);
einen zentralen verschiebbaren Belag (54, 56);
wobei die Kräfte, die durch den Scheiben-Kraftapplikator (44) auf die Scheiben (38, 40) und durch den Bremsbelag-Kraftapplikator (71) auf die verschiebbaren Bremsbeläge (50, 54, 56) ausgeübt werden, ausgeglichen sind, so dass sich das System (10) durch Wirken von Trennkräften zwischen den Scheiben (38, 40) und den Bremsbelägen (50, 54, 56) aus seinem gebremsten Zustand in seinen nicht gebremsten Zustand bewegen kann, wobei die erste Scheibe (40) mit einem ersten Abstand axial auf der Nabe (14) gleitet, um sich dadurch selbst von dem feststehenden Bremsbelag (60) zu lösen, die zentrale, verschiebbare Bremsbelaganordnung (58) mit einem zweiten Abstand, der größer ist als der erste Abstand, auf dem feststehenden Träger (64) gleitet, um sich dadurch selbst von der ersten Scheibe (40) zu lösen, die zweite Scheibe (38) mit einem dritten Abstand, der größer ist als der zweite Abstand, axial auf der Nabe (14) gleitet, um sich dadurch selbst von dem zentralen, verschiebbaren Bremsbelag (54, 56) zu lösen, und der andere verschiebbare Bremsbelag (56) mit einem vierten Abstand, der größer ist als der dritte Abstand, auf dem feststehenden Träger (64) gleitet, um sich dadurch selbst von der zweiten Scheibe (38) zu lösen, wobei die durch die Applikatoren in dem nicht gebremsten Zustand ausgeübten Kräfte ausreichen, um zu verhindern, dass ein axiales Gleiten der Scheiben (38, 40) einen Kontakt einer der Scheiben (38, 40) mit einem der Bremsbeläge (50, 54, 56, 60) bewirkt, und um zu verhindern, dass ein axiales Gleiten des verschiebbaren Belags (50, 54, 56) einen Kontakt zwischen einer der Scheiben (38, 40) und einem der verschiebbaren Beläge (54, 56, 50) bewirkt.

18. Scheibenbremssystem (10) nach Anspruch 17, wobei:
der Belag-Kraftapplikator (71) mindestens eine Blattfeder umfasst, welche die verschiebbaren Bremsbeläge (50, 54, 56) gegen den feststehenden Träger (64) drückt; und
der Scheiben-Kraftapplikator (44) mindestens eine Blattfeder umfasst, die zwischen der Nabe (14) und den verschiebbaren Bremsscheiben (38, 40) angeordnet ist.

19. Scheibenbremssystem (10) nach Anspruch 18, wobei:
die Blattfeder des Belag-Kraftapplikators (71) separate Blattfedern (71a, 71 b) umfasst, die gegen die jeweiligen verschiebbaren Bremsbeläge (50, 54, 56) drücken; und
der Scheiben-Kraftapplikator (44) eine separate Blattfeder umfasst, die zwischen der ersten und der zweiten Bremsscheibe (38, 40) angeordnet ist.

20. Scheibenbremssystem (10) nach Anspruch 16, wobei die zumindest eine Bremsscheibe (38, 40) umfasst:
eine erste und eine zweite Bremsscheibe (38, 40);
die Bremsbeläge (50, 54, 56, 60), die jeweils in einer gebremsten Stellung Bremsmoment auf die Scheibe (38, 40) ausüben, wobei die Bremsbeläge (50, 54, 56, 60) einen zentralen, verschiebbaren Bremsbelag (54, 56) zwischen der ersten und der zweiten Bremsscheibe (38, 40) umfassen;
wobei die Kräfte, die durch den Scheiben-Kraftapplikator (44) auf die Scheiben (38, 40) und durch den Bremsbelag-Kraftapplikator (71) auf die verschiebbaren Bremsbeläge (50, 54, 56) ausgeübt werden, ausgeglichen sind, so dass sich das System (10) durch Wirken von Trennkräften zwischen den Scheiben (38, 40) und den Bremsbelägen aus seinem gebremsten Zustand in seinen nicht gebremsten Zustand bewegen kann, wobei die erste Scheibe mit dem ersten Abstand axial auf der Nabe (14) gleitet, um sich dadurch selbst von dem feststehenden Bremsbelag (60) zu lösen, die zentrale, verschiebbare Bremsbelaganordnung (58) mit dem zweiten Abstand, der größer ist als der erste Abstand, auf dem feststehenden Träger (64) gleitet, um sich dadurch selbst von der ersten Scheibe (40) zu lösen, die zweite Scheibe (38) mit einem dritten Abstand, der größer ist als der zweite Abstand, axial auf der Nabe (14) gleitet, um sich dadurch selbst von der zentralen, verschiebbaren Bremsbelaganordnung (58) zu lösen, und der andere verschiebbare Bremsbelag (50) mit einem vierten Abstand, der größer ist als der dritte Abstand, auf dem feststehenden Träger (64) gleitet, um sich dadurch selbst von der zweiten Scheibe (38) zu lösen, wobei die durch die Applikatoren (44, 71) in dem nicht gebremsten Zustand ausgeübten Kräfte ausreichen, um zu verhindern, dass ein axiales Gleiten der Scheiben (38, 40) einen Kontakt einer der Scheiben (38, 40) mit einem der Bremsbeläge (50, 54, 56, 60) bewirkt, und um zu verhindern, dass ein axiales Gleiten der verschiebbaren Beläge (50, 54, 56) einen Kontakt zwischen einer der Scheiben (38, 40) und einem der verschiebbaren Beläge (54, 56, 50) bewirkt.

21. Scheibenbremssystem (10) nach Anspruch 20, wobei mehrere Blattfedern zwischen der Nabe (14) und dem Innenabschnitt jeder Bremsscheibe (38, 40) angeordnet sind, um die Reibung zwischen den sich in Anlage befindenden Flächen der Antriebsverbindung (19) der Nabe (14) und der Scheibe (38, 40) zu verstärken.

22. Brems- und Aufhängungssystem für ein Fahrzeug, umfassend:
ein Scheibenbremssystem nach Anspruch 1; und
eine Fahrzeugaufhängung mit einem Aufhängungselement (12);
ein Rad, das ausgebildet ist, durch das Aufhängungselement (12) des Fahrzeugs getragen zu werden;
eine Scheibenbrems- und Radträgeranordnung mit einem tragenden Aufhängungselement;
die drehbare Nabe (14), die auf dem Aufhängungselement (12) drehbar um die durch die Nabe (14) verlaufende zentrale Drehachse (22) montiert ist und das Rad drehbar um die Drehachse (22) trägt;
den Bremsbetätiger (75) für die Scheibenbremse (10), der auf dem tragenden Aufhängungselement (12) montiert ist;
die feststehende Trägeranbringung (64), die eine feststehende Brücke auf dem Aufhängungselement umfasst;
einen äußeren feststehenden Bremsbelag (60), der auf der Brücke montiert ist, um gegen eine Seite der Bremsscheibe (38, 40) anzuliegen; und
den verschiebbaren Bremsbelag (50, 54, 56), der durch den Bremsbetätiger (75) verschiebbar ist, um mit seiner Reibfläche gegen die andere Seite der Scheibe (38, 40) anzuliegen und die Bremsscheibe (38, 40) axial entlang der Nabe (14) aus einer nicht gebremsten Restdrehmomentstellung in eine gebremste Stellung zu verschieben, in welcher die Bremsbeläge (50, 54, 56, 60) gegen voneinander abgewandte Seiten der Bremsscheibe (38, 40) anliegen, um die Scheibe (14), die Nabe und das Rad abzubremsen.

23. Bremssystem für ein Fahrzeug nach Anspruch 22, wobei der Bremsbetätiger (75) für die Scheibenbremse (10) einen hydraulischen Zylinder (72) mit einem Kolben (74) umfasst, welcher den verschiebbaren Bremsbelag (50, 56, 54) in die gebremste Stellung drückt;
ein komprimierbarer Dichtungsring (79) zwischen dem Zylinder (72) und dem Kolben (74) eine Rückstellkraft auf den Kolben (74) ausübt, wenn der Druck der Bremsflüssigkeit in der nicht belasteten Bremsstellung vermindert wird; und
der hydraulische Zylinder (72) an einer oberen vertikalen Position auf der Aufhängung (12) montiert ist.

24. Bremssystem für ein Fahrzeug nach Anspruch 22, wobei:
eine zweite Bremsscheibe (38) axial verschiebbar auf der Nabe (14) montiert ist; und
ein zentraler Bremsbelagträger (58) mit einander abgewandten Reibbelägen verschiebbar auf der feststehenden Brücke montiert ist, um mit zugewandten Seiten der jeweiligen Bremsscheiben (38, 40) in Anlage zu treten;
der Kraftapplikator (71) den zentralen Belagträger (58) in einer nicht gebremsten Restdrehmomentstellung relativ zu den rotierenden Bremsscheiben (38, 40) hält.

25. Bremssystem für ein Fahrzeug nach Anspruch 22, wobei ein Reibung-Kraftapplikator zwischen der Bremsscheibe (38, 40) und der Nabe (14) angeordnet ist, um Reibungskräfte auszuüben, um die Bremsbeläge (50, 54, 56, 60) dabei zu unterstützen, die Bremsscheiben (38, 40) in nicht gebremsten Restbelastungsstellungen zu positionieren.

26. Bremssystem für ein Fahrzeug nach Anspruch 22, wobei ineinandergreifende Verzahnungen (42) auf der Bremsscheibe (38, 40) und der Nabe (14) gebildet sind, um eine positive Antriebsverbindung zwischen diesen bereitzustellen; und
Federelemente zwischen der Nabe (14) und der Bremsscheibe (38, 40) angeordnet sind, um Reibungskräfte auszuüben und somit einem freien Gleiten der Bremsscheibe (38, 40) auf der Nabe (14) zu widerstehen, wenn die Bremsscheibe (38, 40) erwärmt wird und sich ausdehnt und sich dann nach dem Abkühlen zusammenzieht.

27. Bremssystem für ein Fahrzeug nach Anspruch 22, wobei die beiden Bremsscheiben (38, 40) auf weniger als 20°C über Umgebungstemperatur abkühlen, wenn die Umgebungstemperatur im Bereich von 10°C bis 20°C liegt.

28. Bremssystem für ein Fahrzeug nach Anspruch 22, wobei die rotierende Bremsscheibe (38, 40) und die Bremsbeläge (50, 54, 56, 60) und die Bremsbelag-Kraftapplikatoren (71) die Bremsscheiben (38, 40) so positionieren, dass sie zufällig an verschiedenen Stellen an die Bremsbeläge (50, 54, 56, 60) anliegen, wodurch sie einen Verschließ durch Anliegen an derselben Stelle der Scheibe während jeder Drehung verhindern, der zu einer unterschiedlichen Dicke der Scheibe führen könnte.

29. Verfahren zur Scheibenbremsung, bei dem innere und äußere, ringförmige Bremsscheiben (38, 40) verwendet werden, die auf einer drehbaren Nabe (14) montiert sind, um axial auf dieser zu gleiten, und mit einer feststehenden Sattelbrücke (64) mit Bremsbelägen (50, 54, 56, 60) mit vier Bremsbelag-Reibflächen (50a, 54a, 56a, 60a), die auf einander abgewandten Seiten der Bremsscheiben (38, 40) anliegen, wobei das Verfahren umfasst:
Ausüben einer Betätigungskraft auf die verschiebbaren Bremsbeläge (50, 54, 56), um diese entlang der Brücke in eine gebremste Stellung zu verschieben, um Ränder der ringförmigen Scheiben (38, 40) mit den vier Reibbelagflächen (50a, 54a, 56a, 60a) in Anlage zu bringen, um Bremskräfte zu erzeugen und somit die Scheiben (38, 40) abzubremsen;
Drücken der Bremsscheiben (38, 40) durch die verschiebbaren Bremsbeläge (50, 54, 56) entlang der Nabe (14), um eine Außenseite einer äußeren Bremsscheibe (38, 40) mit einem feststehenden Bremsbelag (60) auf der festen Brücke (14) in der gebremsten Stellung in Anlage zu bringen;
Verringern der Betätigungskraft nach dem Bremsvorgang;
Ausüben von Kräften durch die rotierenden Bremsscheiben (38, 40) auf die verschiebbaren Bremsbeläge (50, 54, 56), um vorbestimmte Federkräfte zu überwinden, welche die verschiebbaren Bremsbeläge (50, 54, 56) gegen ein Gleiten halten, um die Bremsbeläge in nicht gebremste Stellungen zu schieben;
Ausüben von Federkräften zwischen jeder der Bremsscheiben (38, 40) und der Nabe (14), um dazu beizutragen, die Bremsscheiben (38, 40) auf der Nabe (14) in nicht gebremste Stellungen zu bringen; und
**dadurch gekennzeichnet, dass** das Verfahren ferner vorsieht, die Sattelbrücke und die Beläge mit zusammenwirkenden bearbeiteten flachen Gleitanbringungsflächen (59A) zu versehen und Federkräfte auf die verschiebbaren Bremsbeläge (50, 54, 56) auszuüben, um die zusammenwirkenden bearbeiteten flachen Gleitanbringungsflächen der Bremsbeläge gegen die zusammenwirkenden bearbeiteten flachen Gleitanbringungsflächen (59A, 68) der Bremsbeläge der Sattelbrücke (68) zu drücken, wobei die Federkräfte so groß sind, dass sie ausreichend sind, um die Bremsbeläge (50, 54, 56) im Wesentlichen gegen ein Kippen zu halten und die Reibungsfläche des Bremsbelags im Wesentlichen parallel zu der Ebene der Seiten der Bremsscheibe (38, 40) halten, um dadurch die Anlage zwischen den rotierenden Bremsscheiben (38, 40) und den Bremsbelägen (50, 54, 56) in ihrer jeweiligen nicht gebremsten Stellung auf eine nur zufällige Anlage zwischen diesen einzuschränken, um den durch Rubbeln entstehenden Unterschied in der Scheibendicke zu minimieren und nicht belastetes Restdrehmoment zwischen den Scheiben (38, 40) und den Bremsbelägen (50, 54, 56) zu minimieren.

30. Verfahren nach Anspruch 29, das vorsieht, die Scheibenbremsanordnung (10) auf einer Fahrzeugaufhängung (12) vorzusehen; und
die Temperatur der Bremsscheiben (38, 40) auf Grund von nicht gebremstem Restdrehmoment bei weniger als 20°C über Umgebungstemperatur zu halten, wenn die Umgebungstemperatur im Bereich von 10°C bis 20°C liegt, wenn das Fahrzeug geradeaus fährt.

31. Verfahren nach Anspruch 29, das vorsieht, die Scheibenbremse (10) auf einer Fahrzeugaufhängung (12) vorzusehen; und
das Fahrzeug durch den AMS-Test zu fahren und die Temperatur der Bremsscheiben unter 650°C zu halten.

32. Verfahren nach Anspruch 31, das den Schritt vorsieht, die Temperatur der Bremsscheibe (38, 40) unter 600°C zu halten.

33. Verfahren nach Anspruch 29, das vorsieht, die Bremsbeläge (50, 54, 56, 60) aus einer Stellung über der Drehachse (22) durch die Nabe (14) und in einer vertikalen Ebene in einer Position entsprechend etwa 12 Uhr zu betätigen.

34. Verfahren nach Anspruch 29, bei dem das Ausüben der Betätigungskraft auf die verschiebbaren Bremsbeläge (50, 54, 56) vorsieht, eine hydraulisch betätigten Kolben (74) zu bewegen, um zumindest zwei verschiebbare Bremsbeläge (50, 54, 56) und zumindest zwei verschiebbare Bremsscheiben (38, 40) dazu zu bringen, in die gebremste Stellung zu wechseln.

35. Verfahren nach Anspruch 29, das den Schritt vorsieht, die Federkräfte auf den Bremsbelägen (50, 54, 56) und den Bremsscheiben (38, 40) auszugleichen, um deren Trennung voneinander zu ermöglichen, damit diese in eine nicht gebremste Stellung wechseln, und sie gegen ein Kippen zu halten, um eine unterschiedliche Scheibendicke der Bremsscheiben (38, 40) zu verhindern.

## Revendications

1. Système de frein à disque (10) comprenant un moyeu (14) monté pour tourner autour d'un axe central (22) à travers le moyeu ;
au moins un disque de frein (38, 40) ayant une partie intérieure montée de façon coulissante sur le moyeu (14) pour coulisser dans une direction parallèle à l'axe central (22) du moyeu (14) entre une position de freinage et position de non-freinage ;
une liaison d'entraînement (19) entre le moyeu (14) et le disque de frein (38, 40) pour faire tourner le disque (38, 40) avec la rotation du moyeu (14) et pour décélérer la rotation du moyeu (14) lorsque le disque (38, 40) est dans la position de freinage ;
des plaquettes de freinage (50, 54, 56, 60) comprenant au moins une plaquette de frein coulissante (50, 54, 56) comprenant un logement de plaquette coulissant (52, 58) supportant une surface de plaquette de frottement sur celui-ci pour appliquer un couple de freinage sur des côtés opposés du disque de frein (38, 40) lorsqu'il est dans la position de couple de freinage pour décélérer le disque de frein en prise (38, 40) et ainsi le moyeu (14) ;
un support stationnaire (64) monté sur la plaquette de frein coulissante (50, 54, 56) pour se déplacer entre une position de non-freinage et la position de freinage, le logement de plaquette coulissant (52, 58) de la plaquette de frein coulissante (50, 54, 56) étant monté pour coulisser sur le support stationnaire (64) ;
un actionneur de frein (75) pour faire coulisser la plaquette de frein coulissante (50, 54, 56) et le disque de frein (38, 40) jusqu'à la position de freinage ;
un applicateur de force de disque (44) appliquant une force dirigée de façon radiale entre le moyeu (14) et la partie intérieure du disque de frein (38, 40) pour entraîner un frottement entre le moyeu (14) et la partie intérieure du disque (38, 40) pour retarder leur coulissement de façon axiale l'un par rapport à l'autre ;
une partie de bord extérieure sur le disque de freinage (38, 40) tournant lorsqu'il est dans la position de non-freinage et venant en prise avec la surface de frottement de la plaquette de frein coulissante (50, 54, 56, 60) pour faire coulisser la plaquette (50, 54, 56) de la position de freinage à une position de plaquette de non-freinage ;
le disque de frein coulissant (38, 40) flottant sur l'applicateur de force de disque (44) et pouvant coulisser de façon axiale le long du moyeu (14) d'une position de freinage à une position de non-freinage par rapport aux plaquettes de freinage (50, 54, 56, 60) ; et
**caractérisé par**
le support stationnaire (64) ayant une surface de support usinée plate (68) sur celui-ci ; et
le logement coulissant (52, 58) des plaquettes de freinage (50, 54, 56, 60) ayant une surface de coulissement plate usinée (59A) sur celui-ci en contact de frottement coulissant avec la surface de support plate usinée (68) du support stationnaire (64) ; et
l'applicateur de force de plaquette de frein (71) comprenant un ressort poussant la surface de coulissement usinée (59a) du logement coulissant (52, 58) contre la surface de support usinée (68) du support stationnaire pour empêcher l'inclinaison du logement coulissant (52, 58) sur le support stationnaire (64), l'applicateur de force de plaquette de frein (71) agissant sur la plaquette de frein coulissante (50, 54, 56) pour appliquer une force sur la plaquette de frein coulissante (50, 54, 56) à un niveau suffisant pour maintenir sensiblement la plaquette de frein (50, 54, 56) et la surface de plaquette de frottement de celle-ci dans un plan sensiblement parallèle à un plan des côtés du disque de frein (38, 40) pour contraindre la surface de plaquette de frottement venant en prise avec le disque de frein (38, 40) à réduire l'inclinaison de la plaquette de frein (50, 54, 56) sur le support stationnaire et son frottement sur le disque de frein (38, 40) qui augmenterait le couple résiduel de non-freinage dans la condition de non-freinage.

2. Système de frein à disque (10) selon la revendication 1, dans lequel l'applicateur de force de plaquette de frein (71) comprend au moins un ressort poussant sur les plaquettes de frein (50, 54, 56) dans une direction sensiblement normale à l'axe de rotation (22) du disque de frein (38, 40) et normale au trajet de déplacement des plaquettes de frein (50, 54, 56) le long du support stationnaire (64).

3. Système de frein à disque (10) selon la revendication 1, dans lequel le support stationnaire (64) comprend un pont ; et
le ressort (71) est positionné par-dessus le logement de plaquette de frein (52, 58) et force le logement de plaquette de frein (52, 58) vers le bas contre le pont.

4. Système de frein à disque (10) selon la revendication 1, dans lequel deux disques de frein (38, 40), ou plus, sont montés de façon coulissante sur le moyeu (14) ;
une plaquette de frein coulissante centrale (54, 56) ayant des plaquettes de frottement opposées sur celle-ci est disposée entre les deux disques de frein (38, 40) et est montée de façon coulissante sur le support stationnaire (64) ;
et l'applicateur de force de frein (71) comprend au moins un ressort pour contraindre la plaquette de frein coulissante (59) et la plaquette de frein coulissante centrale (54, 56) et pour aider à contraindre les bords des deux disques de freins coulissants (38, 40) dans leur position de non-freinage.

5. Système de frein à disque (10) selon la revendication 1, dans lequel dans la position de non-freinage, l'applicateur de force de disque (44) maintient le disque de frein (38, 40) dans un premier plan radial ; et l'applicateur de force de plaquette de frein (71) maintient sa surface de plaquette de frottement (50a, 54a, 56a) dans un second plan radial parallèle au premier plan radial pour limiter le contact entre la surface de frottement et le disque de frein pour entraîner un type aléatoire de contact entre ceux-ci.

6. Système de frein à disque (10) selon la revendication 1 ou la revendication 5, dans lequel l'applicateur de force de plaquette de frein forçant les plaquettes de frein (50, 54, 56) contre le support (64) fournit une force de frottement prédéterminée entre ceux-ci suffisante pour aider à positionner les bords extérieurs des disques de frein (38, 40) dans une direction et position axiale sur le moyeu (14).

7. Système de frein à disque (10) selon la revendication 1, dans lequel l'actionneur de frein (75) comprend un cylindre hydraulique (72) et un piston hydraulique alternatif (74) dans le cylindre (72) ; et
une bague d'étanchéité compressible (79) dans le cylindre (72) compressible par le mouvement du piston (74) et stockant de l'énergie pour fournir une force de retour pour escamoter le piston (74) permettant ainsi à la plaquette de frein (50, 54, 56) de se déplacer de façon axiale le long de son support stationnaire (64) vers le cylindre (72) durant la rotation du disque de frein (38, 40) dans sa position de non-freinage.

8. Système de frein à disque (10) selon la revendication 1, dans lequel la liaison d'entraînement (19) entre le disque (38, 40) et le moyeu (14) comprend des dents engrenées les unes dans les autres (42, 20).

9. Système de frein à disque (10) selon la revendication 1, dans lequel l'applicateur de force de plaquette de frein (71) est également actionnable, lorsque la plaquette de frein coulissante (50, 56, 54) est dans sa position de non-freinage, pour empêcher la plaquette de frein coulissante (50, 56, 54) d'entrer en contact avec le disque (38, 40) en coulissant de façon axiale sur le support stationnaire (64).

10. Système de frein à disque (10) selon la revendication 8, dans lequel les dents (42, 20) sur le disque de frein (38, 40) sont pourvues d'arrondis de pied de dent de réduction de contrainte au niveau des jointures des dents (42, 20) au reste du disque de frein (38, 40).

11. Système de frein à disque (10) selon la revendication 1, dans lequel :
le disque (38, 40) se dilate à des températures plus élevées et a tendance à coulisser de façon axiale par rapport au moyeu (14) ; et
l'applicateur de force de disque (44) entre le disque de frein (38, 40) et le moyeu (14) comprend un ressort appliquant des forces de frottement pour limiter le coulissement du disque dilaté (38, 40) sur le moyeu (14).

12. Système de frein à disque (10) selon la revendication 4, dans lequel l'applicateur de force de plaquette de frein (71) comprend des ressorts séparés pouvant chacun venir en prise avec la plaquette de frottement coulissante (50) et la plaquette de frottement centrale coulissante (54, 56).

13. Système de frein à disque (10) selon la revendication 1, dans lequel le couple à vide résiduel permet aux disques de frein (38, 40) de refroidir rapidement jusqu'à moins de 20 degrés au-dessus d'une température ambiante dans la plage de 10° à 20°C en raison du couple de non-freinage résiduel.

14. Système de frein à disque (10) selon la revendication 1, dans lequel :
l'applicateur de force de plaquette de frein (71) comprend un ressort à lames positionné par-dessus le logement coulissant (52, 58) et poussant la surface de coulissement usinée (59a) du logement contre la surface de support usinée stationnaire (68).

15. Système de frein à disque (10) selon la revendication 1 dans lequel les applicateurs de force (44, 71) maintiennent la plaquette de frein (50, 56, 54) et le disque de frein (38, 40) dans des plans parallèles normaux à l'axe de rotation (22) de sorte que la prise du disque (38, 40) avec la plaquette (50, 56, 54) avec la révolution de la plaquette est aléatoire et évite de frotter au même endroit avec chaque révolution ce qui entraînerait une usure et des variations d'épaisseur du disque (38, 40).

16. Système de frein à disque (10) selon la revendication 1, dans lequel les plaquettes de freinage (50, 54, 56, 60) comprennent en outre une plaquette de frein stationnaire (60) qui est fixe par rapport au moyeu (14) ;
l'actionneur (75) étant également actionnable pour créer un espace libre suffisant pour permettre à la plaquette de frein coulissante (50, 54, 56) et au disque de coulisser jusqu'à la condition de non-freinage ; et
l'applicateur de force de plaquette de frein (71) agissant sur la plaquette de frein coulissante (50, 54, 56) dans lequel les forces appliquées sur le disque (38, 40) par l'applicateur de force de disque (44) et sur la plaquette de frein coulissante (50, 54, 56) par l'applicateur de force de plaquette de frein (71) sont équilibrées de sorte que le système peut se déplacer de sa condition de freinage à sa condition de non-freinage par l'action de forces de séparation entre le disque (38, 40) et les plaquettes de freinage (50, 54, 56), le disque (38, 40) coulissant de façon axiale sur le moyeu (14) selon une première distance pour ainsi se séparer de la plaquette de frein stationnaire ; et la plaquette de frein coulissante (50, 54, 56) coulissant sur le support stationnaire (64) selon une deuxième distance, qui est supérieure à ladite première distance, pour ainsi se séparer du disque (38, 40), les forces appliquées par les applicateurs (44, 71) dans la condition de non-freinage étant suffisantes pour empêcher le coulissement axial du disque (38, 40) entraînant le contact avec l'une des deux plaquettes de freinage (50, 54, 56), et pour empêcher le coulissement axial de la plaquette coulissante (50, 54, 56) d'entraîner le contact entre le disque (38, 40) et la plaquette coulissante (50, 54, 56).

17. Système de frein à disque (10) selon la revendication 16, comprenant :
des premier et second disques (38, 40) ;
une plaquette coulissante centrale (54, 56) ;
les forces étant appliquées sur les disques (38, 40) par l'applicateur de force de disque (44) et sur les plaquettes de frein coulissantes (50, 54, 56) par l'applicateur de force de plaquette de frein (71) sont équilibrées de sorte que le système (10) peut se déplacer de sa condition de freinage à sa condition de non-freinage par l'action de forces de séparation entre les disques (38, 40) et les plaquettes de freinage (50, 54, 56), le premier disque (40) coulissant de façon axiale sur le moyeu (14) selon une première distance pour ainsi se séparer de la plaquette de frein stationnaire (60), l'ensemble de plaquette de frein coulissant central (58) coulissant sur le support stationnaire (64) selon une deuxième distance, qui est supérieure à ladite première distance, pour ainsi se séparer du premier disque (40), le second disque (38) coulissant de façon axiale sur le moyeu (14) selon une troisième distance, qui est supérieure à ladite deuxième distance, pour ainsi se séparer de la plaquette de frein coulissante centrale (54, 56), et l'autre plaquette de frein coulissante (56) coulissant sur le support stationnaire (64) selon une quatrième distance, qui est supérieure à ladite troisième distance, pour ainsi se séparer du second disque (38), les forces appliquées par les applicateurs dans la condition de non-freinage étant suffisantes pour empêcher le coulissement axial des disques (38, 40) entraînant le contact de l'un des deux disques (38, 40) avec l'une quelconque des plaquettes de freinage (50, 54, 56, 60), et pour empêcher le coulissement axial des plaquettes coulissantes (50, 54, 56) d'entraîner le contact entre l'un des deux disques (38, 40) et l'une des deux plaquettes coulissantes (54, 56, 50).

18. Système de frein à disque (10) selon la revendication 17, dans lequel :
l'applicateur de force de plaquette (71) comprend au moins un ressort à lames poussant les plaquettes de frein coulissantes (50, 54, 56) contre le support stationnaire (64) ; et
l'applicateur de force de disque (44) comprend au moins un ressort à lames disposé entre le moyeu (14) et les disques de frein coulissants (38, 40).

19. Système de frein à disque (10) selon la revendication 18, dans lequel :
le ressort à lames de l'applicateur de force de plaquette (71) comprend des ressorts à lames séparés (71a, 71b) poussant contre les plaquettes de frein coulissantes respectives (50, 54, 56) ; et
l'applicateur de force de disque (44) comprend un ressort à lames séparé disposé entre chacun des premier et second disques de frein (38, 40).

20. Système de frein à disque (10) selon la revendication 16, dans lequel le au moins un disque de frein (30, 40) comprend :
un premier et second disques de frein (38, 40) ;
les plaquettes de freinage chacune (50, 54, 56, 60) pour appliquer un couple de freinage sur le disque (38, 40) lorsqu'elles sont dans une position de freinage de celui-ci, les plaquettes de freinage (50, 54, 56, 60) comprenant une plaquette de frein coulissante centrale (54, 56) entre les premier et second disques de frein (38, 40),
dans lequel les forces appliquées sur les disques (38, 40) par l'applicateur de force de disque (44) et sur les plaquettes de frein coulissantes (50, 54, 56) par l'applicateur de force de plaquette de frein (71) sont équilibrées de sorte que le système (10) peut se déplacer de sa condition de freinage à sa condition de non-freinage par l'action de forces de séparation entre les disques (38, 40) et les plaquettes de freinage, le premier disque coulissant de façon axiale sur le moyeu (14) selon la première distance pour ainsi se séparer de la plaquette de frein stationnaire (60), l'ensemble de plaquette de frein coulissant central (58) coulissant sur le support stationnaire (64) selon la deuxième distance, qui est supérieure à ladite première distance, pour ainsi se séparer du premier disque (40), le second disque (38) coulissant de façon axiale sur le moyeu (14) selon une troisième distance, qui est supérieure à ladite deuxième distance, pour ainsi se séparer de l'ensemble de plaquette de frein coulissant central (58), et l'autre plaquette de frein coulissante (50) coulissant sur le support stationnaire (64) selon une quatrième distance, qui est supérieure à ladite troisième distance, pour ainsi se séparer du second disque (38), les forces appliquées par les applicateurs (44, 71) dans la condition de non-freinage étant suffisantes pour empêcher le coulissement axial des disques (38, 40) entraînant le contact de l'un des deux disques (38, 40) avec l'une quelconque des plaquettes de freinage (50, 54, 56, 60), et pour empêcher le coulissement axial des plaquettes coulissantes (50, 54, 56) d'entraîner le contact entre l'un des deux disques (38, 40) et l'une des deux plaquettes coulissantes (50, 54, 56).

21. Système de frein à disque (10) selon la revendication 20, dans lequel une pluralité de ressorts à lames sont positionnés entre le moyeu (14) et la partie intérieure de chaque disque de frein (38, 40) pour augmenter le frottement entre les surfaces en prise de la liaison d'entraînement (19) du moyeu (14) et du disque (38, 40).

22. Système de freinage et de suspension de véhicule comprenant :
un système de frein à disque selon la revendication 1, et ;
une suspension de véhicule ayant un élément de suspension (12) ;
une roue adaptée pour être supportée par l'élément de suspension de véhicule (12) ;
un ensemble de frein à disque et support de roue ayant un élément de suspension de support ;
le moyeu rotatif (14) monté sur l'élément de suspension (12) pour tourner autour de l'axe de rotation central (22) à travers le moyeu (14) et supportant la roue pour tourner autour de l'axe de rotation (22) ;
l'actionneur de frein (75) pour le frein à disque (10) monté sur l'élément de suspension de support (12) ;
le montage de support stationnaire (64) comprenant un pont stationnaire sur l'élément de suspension ;
une plaquette de frein fixe extérieure (60) montée sur le pont pour venir en prise avec un côté du disque de frein (38, 40) et ;
la plaquette de frein coulissante (50, 54, 56) que l'actionneur de frein (75) fait coulisser pour faire venir en prise la surface de frottement sur celle-ci avec l'autre côté du disque (38, 40) et pour faire coulisser le disque de frein (38, 40) de façon axiale jusqu'au moyeu (14) d'une position de couple résiduel de non-freinage à une position de freinage dans laquelle les plaquettes de freinage (50, 54, 56, 60) viennent en prise avec les côtés opposés du disque de frein (38, 40) pour freiner le disque (14), le moyeu et la roue.

23. Système de freinage de véhicule selon la revendication 22, dans lequel l'actionneur de frein (75) pour le frein à disque (10) comprend un cylindre hydraulique (72) ayant un piston (74) pour forcer la plaquette de frein appropriée (50, 56, 54) jusqu'à la position de freinage ;
une bague d'étanchéité compressible (79) entre le cylindre (72) et le piston (74) exerce une force de retour sur le piston (74) lorsque la pression de fluide de freinage est relâchée au niveau de la position de freinage à vide ; et
le cylindre hydraulique (72) étant monté au niveau d'une position verticale supérieure sur la suspension (12).

24. Système de freinage de véhicule selon la revendication 22, dans lequel :
un second disque de frein (38) est monté sur le moyeu (14) pour un mouvement de coulissement axial sur celui-ci ; et
un logement de plaquette de frein central (58) ayant des plaquettes de frottement opposées est monté de façon coulissante sur le pont stationnaire pour venir en prise avec les côtés se faisant face des disques de frein respectifs (38, 40) ;
l'applicateur de force (71) maintenant le logement de plaquette central (58) dans une position de couple résiduel de non-freinage par rapport aux disques de frein rotatifs (38, 40).

25. Système de freinage de véhicule selon la revendication 22, dans lequel un applicateur de force de frottement est positionné entre le disque de frein (38, 40) et le moyeu (14) pour exercer des forces de frottement pour aider les plaquettes de frein (50, 54, 56, 60) à positionner les disques de frein (38, 40) au niveau de positions de charge résiduelle de non-freinage.

26. Système de freinage de véhicule selon la revendication 22, dans lequel des cannelures engrenées les unes dans les autres (42) sont formées sur le disque de frein (38, 40) et le moyeu (14) pour fournir une liaison d'entraînement forcé entre ceux-ci ; et
des éléments de ressort sont positionnés entre le moyeu (14) et le disque de frein (38, 40) pour appliquer des forces de frottement pour s'opposer au coulissement libre du disque de frein (38, 40) sur le moyeu (14) lorsque le disque de frein (38, 40) est chauffé et se dilate et ensuite se contracte lorsqu'il est refroidi.

27. Système de freinage de véhicule selon la revendication 22, dans lequel les deux disques de frein (38, 40) refroidissent à moins de 20°C au-dessus de la température ambiante lorsque la température ambiante est dans la plage de 10°C à 20°C.

28. Système de freinage de véhicule selon la revendication 22, dans lequel le disque de frein rotatif (38, 40) et les plaquettes de frein (50, 54, 56, 60) et les applicateurs de force de plaquette de frein (71) positionnent les disques de frein (38, 40) pour venir en prise de façon aléatoire avec les plaquettes de frein (50, 54, 56, 60) au niveau de différents emplacements, empêchant ainsi l'usure en raison de la prise au niveau du même endroit sur le disque durant chaque révolution ce qui entraînerait une variation de l'épaisseur du disque.

29. Procédé de freinage de disque utilisant des disques de frein annulaires intérieur et extérieur (38, 40) montés sur un moyeu rotatif (14) pour un coulissement axial sur celui-ci et ayant un pont d'étrier fixe (64) avec des plaquettes de frein (50, 54, 56, 60) avec quatre surfaces de frottement de plaquette de frein (50a, 54a, 56a, 60a) sur celles-ci pour venir en prise avec des côtés opposés des disques de frein (38, 40), ledit procédé comprenant :
l'application d'une force d'actionnement sur les plaquettes de frein coulissantes (50, 54, 56) pour les faire coulisser le long du pont jusqu'à une position de freinage pour venir en prise avec les bords des disques annulaires (38, 40) avec les quatre surfaces de frottement de plaquette (50a, 54a, 56a, 60a) pour générer des forces de freinage pour décélérer les disques (38, 40) ;
la poussée des disques de frein (38, 40) par les plaquettes de frein coulissantes (50, 54, 56) le long du moyeu (14) pour venir en prise avec un côté extérieur d'un disque de frein extérieur (38, 40) avec une plaquette de frein stationnaire (60) sur le pont fixe (14) au niveau de la position de freinage ;
le relâchement de la force d'actionnement après le freinage ;
l'exercice de forces par les disques de frein rotatifs (38, 40) sur les plaquettes de frein coulissantes (50, 54, 56) pour dépasser des forces de ressort prédéterminées empêchant les plaquettes de frein coulissantes (50, 54, 56) de coulisser pour déplacer les plaquettes de frein jusqu'à des positions de non-freinage ;
l'exercice de forces de ressort entre chacun des disques de frein (38, 40) et le moyeu (14) pour aider à positionner les disques de frein (38, 40) sur le moyeu (14) au niveau de positions de non-freinage ; et
**caractérisé en ce que** le procédé comprend en outre le fait de doter le pont d'étrier et les plaquettes de surfaces de montage de coulissement plates usinées coopérantes (59A) et le fait d'exercer des forces de ressort sur les plaquettes de frein coulissantes (50, 54, 56) pour pousser les surfaces de montage de coulissement plates usinées coopérantes des plaquettes de frein contre les surfaces de montage de coulissement plates usinées coopérantes (59A, 68) des plaquettes de frein du pont d'étrier (68), lesdites forces de ressort étant à un niveau suffisant pour empêcher sensiblement les plaquettes de frein (50, 54, 56) de s'incliner et maintenir la surface de frottement de la plaquette de frein sensiblement parallèle au plan des côtés du disque de frein (38, 40) pour ainsi limiter la prise entre les disques de frein rotatifs (38, 40) et les plaquettes de frein (50, 54, 56) au niveau de leurs positions de non-freinage respectives à seulement une prise aléatoire entre ceux-ci pour minimiser la variation d'épaisseur de disque en raison du frottement et pour minimiser le couple résiduel à vide entre les disques (38, 40) et les plaquettes de frein (50, 54, 56).

30. Procédé selon la revendication 29, comprenant la mise à disposition de l'ensemble de frein à disque (10) sur une suspension de véhicule (12) ; et
le maintien de la température des disques de frein (38, 40) en raison de couple résiduel de non-freinage à moins de 20° au-dessus de la température ambiante lorsque la température ambiante est dans la plage de 10° à 20°C lorsque le véhicule est conduit dans une trajectoire en ligne droite.

31. Procédé selon la revendication 29, comprenant la mise à disposition du frein à disque (10) sur une suspension de véhicule (12) ; et
la conduite du véhicule à travers l'essai AMS et le maintien de la température des disques de frein en dessous de 650°C.

32. Procédé selon la revendication 31, comprenant l'étape consistant à maintenir la température du disque de frein (38, 40) en dessous de 600°C.

33. Procédé selon la revendication 29, actionnant les plaquettes de frein (50, 54, 56, 60) à partir d'une position au-dessus de l'axe de rotation (22) à travers le moyeu (14) et dans un plan vertical au niveau d'une position sensiblement à 12 heures.

34. Procédé selon la revendication 29, dans lequel l'application de la force d'actionnement sur les plaquettes de frein coulissantes (50, 54, 56) comprend le déplacement d'un piston actionné de façon hydraulique (74) pour forcer au moins deux plaquettes de frein coulissantes (50, 54, 56) et au moins deux disques de frein coulissants (38, 40) à se déplacer jusqu'à la position de freinage.

35. Procédé selon la revendication 29, comprenant l'étape consistant à équilibrer les forces de ressort sur les plaquettes de frein (50, 54, 56) et les disques de frein (38, 40) pour permettre la séparation les uns des autres pour se déplacer jusqu'à une position de non-freinage et pour les empêcher de s'incliner pour empêcher la variation d'épaisseur de disque des disques de frein (38, 40).
